(19) Europäisches Patentamt
European Patent Office
Office européen des brevets

(11) **EP 4 001 323 A1**

(12) **EUROPEAN PATENT APPLICATION**
published in accordance with Art. 153(4) EPC

(43) Date of publication:
**25.05.2022 Bulletin 2022/21**

(21) Application number: **20843788.9**

(22) Date of filing: **05.06.2020**

(51) International Patent Classification (IPC):
*C08F 20/10* $^{(2006.01)}$    *C08F 6/14* $^{(2006.01)}$
*C08J 3/20* $^{(2006.01)}$    *C08K 5/13* $^{(2006.01)}$
*C08L 33/04* $^{(2006.01)}$

(52) Cooperative Patent Classification (CPC):
**C08F 6/14; C08F 20/10; C08J 3/20; C08K 5/13;
C08L 33/04**

(86) International application number:
**PCT/JP2020/022314**

(87) International publication number:
**WO 2021/014791 (28.01.2021 Gazette 2021/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.07.2019 JP 2019134151**

(71) Applicant: **Zeon Corporation
Tokyo 100-8246 (JP)**

(72) Inventors:
• **MASUDA, Hirofumi
Tokyo 100-8246 (JP)**
• **KAWANAKA, Takafumi
Tokyo 100-8246 (JP)**

(74) Representative: **Fujimoto, Naho
Maiwald Patentanwalts- und
Rechtsanwaltsgesellschaft mbH
Elisenhof
Elisenstraße 3
80335 München (DE)**

(54) **ACRYLIC RUBBER SHEET HAVING GOOD PRESERVATION STABILITY AND PROCESSABILITY**

(57) An acrylic rubber sheet excellent in storage stability and processability, a method for producing the same, an acrylic rubber bale obtained by laminating the sheets, a mixture obtained by mixing the acrylic rubber sheet and the acrylic rubber bale, a method for producing the mixture and a rubber cross-linking product obtained by cross-linking the mixture. The acrylic rubber sheet comprises, an acrylic rubber mainly composed of a (meth) acrylic acid ester and having a weight average molecular weight (Mw) of 100,000 to 5,000,000 and a ratio (Mz / Mw) of a Z-average molecular weight (Mz) and a weight average molecular weight (Mw) is 1.3 or more, and the acrylic rubber sheet contains a phenolic anti-aging agent, and a gel amount is 50wt% or less. The acrylic rubber sheet is extremely excellent in storage stability and processability and the sheet can be easily produced by the claimed method.

**EP 4 001 323 A1**

**Description**

[FIELD OF THE INVENTION]

The present invention relates to an acrylic rubber sheet excellent in storage stability and processability, a method for producing the same, an acrylic rubber bale obtained by laminating the acrylic rubber sheet, a rubber mixture obtained by mixing the acrylic rubber sheet or the acrylic rubber bale, a method for producing the same, and a rubber cross-linked product obtained by cross-linking the same.

Acrylic rubber is a polymer mainly composed of acrylic acid ester and is generally known as rubber excellent in heat resistance, oil resistance, and ozone resistance, and is widely used in fields related to automobiles, added with an anti-aging agent as necessary.

Patent Document 1 (International Publication WO2018/139466 Pamphlet) discloses, for example, a method for producing a crumb-shaped acrylic rubber capable of suppressing contamination of a polymerization apparatus at the time of polymerization and excellent in initial mechanical strength by: stirring monomer components containing ethyl acrylate, n-butyl acrylate, monobutyl fumarate, and the like, together with pure water, sodium lauryl sulfate and polyoxyethylene dodecyl ether, to obtain a monomer emulsion; continuously dropping an aqueous solution of ferrous sulfate, sodium ascorbate and potassium persulfate aqueous solution dropwise over 3 hours; adding an aqueous dispersion containing 50% by weight of stearyl 3-(3,5-tert-butyl-4-hydroxyphenyl) propionate (prepared by mixing an aqueous dispersion of 50 parts of 0.2% by weight sodium lauryl sulfate aqueous solution with 50 parts of stearyl (3,5-di-tert-butyl-4-hydroxyphenyl) propionate) or an aqueous dispersion prepared by 50% by weight of aqueous dispersion of 2,4-bis[(octylthio)methyl]-6-methylphenol (prepared by mixing 50 weight parts of 0.2% by weight aqueous solution of sodium lauryl sulfate) with 50 parts by weight of 2,4-bis[(octylthio)methyl]-6-methylphenol) to an emulsion polymerization liquid having up to a polymerization conversion rate of 95%; thereafter raising the temperature to 85°C; coagulating with sodium sulfate to generate hydrous crumbs; then washing the generated hydrous crumb by industrial water 4 times, washed once with acidic water of pH3 and washed again with pure water; and then drying it at 160°C for 10 minutes with a hot air dryer. Further, it is described that according to this method, the hydrous crumbs washed with a screw-type extruder can be dried at 150°C or higher. However, it has been required, in addition to heat resistance, processability and storage stability under severe environments as to the acrylic rubber.

Regarding the gel amount of the acrylic rubber, for example, Patent Document 2 (Japanese Patent No. 3599962) discloses an acrylic rubber containing 5% by weight or less a gel fraction insoluble in acetone, obtained by copolymerizing 95 to 99.9% by weight of an alkyl acrylate or alkoxyalkyl acrylate and 0.1 to 5% by weight of a polymerizable monomer having two or more radically reactive unsaturated groups having different reactivity, in the presence of a radical polymerization initiator, and an acrylic rubber composition composed of reinforcing filler and organic peroxide vulcanizing agent, excellent in extrusion processability such as extrusion speed, die swell and surface texture. The acrylic rubber used here having a very low gel fraction is obtained by adjusting the polymerization liquid to pH6 to pH8 with sodium hydrogen carbonate or the like with respect to the acrylic rubber with a high gel fraction (60%) obtained in the normal acidic region (pH4 before polymerization, pH3.4 after polymerization). To be specific, water and an emulsifier composed of sodium lauryl sulfate, polyoxyethylene nonylphenyl ether, sodium carbonate and boric acid are charged and adjusted to 75°C, then t-butyl hydroperoxide, rongalite, disodium salt of ethylenediaminetetraacetic acid, and ferrous sulfate are added (pH at this time is 7.1), and thereafter the monomer components of ethyl acrylate and allyl methacrylate are added dropwise to perform emulsion polymerization, and the obtained emulsion (pH7) is salted out using an aqueous sodium sulfate solution, then washed and dried to obtain an acrylic rubber. However, acrylic rubber containing (meth) acrylic acid ester as a main component has a problem in handleability such as inferior storage stability because it decomposes at a neutral to alkaline region. Further, acrylic rubber subjected to emulsion polymerization in which the pH is changed from neutral to alkaline has a problem of being inferior in mechanical strength because reactive groups (crosslinking points) such as a carboxyl group, an epoxy group and a chlorine atom are dropped.

Further, Patent Document 3 (International Publication WO2018/143101 Pamphlet) discloses a technology in which a (meth) acrylic acid ester and an ion-crosslinkable monomer are emulsion-polymerized, an acrylic rubber which has a complex viscosity ($[\eta]$ 100°C) at 100°C of 3,500 Pa·s or less, and a ratio ($[\eta]$ 100°C / $[\eta]$ 60°C) of the complex viscosity ($[\eta]$ 60°C) at 60°C to the complex viscosity ($[\eta]$ 100°C) at 100°C of 0.8 or less, is used, so that the extrusion moldability of a rubber composition containing a reinforcing agent and a cross-linking agent, in particular, the discharge amount, discharge length and surface texture are enhanced. Further, it is described that the gel amount, which is tetrahydrofuran insoluble content of the acrylic rubber used in the same technology is 80% by weight or less, preferably 5 to 80% by weight, and preferably exists as much as possible in the range of 70% or less, and when the gel amount thereof is less than 5%, the extrudability deteriorates. Furthermore, it is described that the weight average molecular weight (Mw) of the acrylic rubber used is 200,000 to 1,000,000, and when the weight average molecular weight (Mw) exceeds 1,000,000, the viscoelasticity of the acrylic rubber becomes high, which is not preferable. However, there has been a demand for a high balance between high strength and processability at the time of kneading such as Banbury, and improvement in storage stability has also been demanded.

[CITATION LIST]

[PATENT LITERATURE]

[Patent Document 1] International Publication WO2018/139466 Pamphlet
[Patent Document 2] Japanese Patent No. 3599962
[Patent Document 3] International Publication WO2018/143101 Pamphlet

[SUMMARY OF THE INVENTION]

[TECHNICAL PROBLEM]

The present invention has been made in consideration of such actual situation, and the present invention is aimed to provide an acrylic rubber sheet excellent in storage stability and processability, a method for producing the same, an acrylic rubber bale obtained by laminating the acrylic rubber sheet, a rubber mixture containing an acrylic rubber sheet or an acrylic rubber sheet, a method for producing the same, and a rubber cross-linked product thereof.

As a result of diligent studies in consideration of the above problems, the present inventors have found that a crumb-shaped acrylic rubber containing a (meth) acrylic acid ester as a main component, having a large distribution of molecular weight in a region at a specific high molecular weight to increase the strength properties, is inferior in storage stability and processability, but the acrylic rubber sheet that contains a specific anti-aging agent and has a specific gel amount has high storage stability and processability without impairing the strength properties.

The present inventors further have found out that the advantageous effect of the present invention can be further enhanced by specifying characters of the sheet kind of the specific anti-aging agent, melting point and content amount of the agent, and by specifying molecular weight, complex viscosity at a specific temperature, pH of the acrylic rubber, and specific gravity of the sheet.

The present inventors have also found that it was very difficult to uniformly disperse the anti-aging agent in an emulsion polymerization liquid obtained by emulsion-polymerizing a monomer component containing a (meth) acrylic acid ester as a main component, so that it was fairly difficult to improve the storage stability of the acrylic rubber, but that it was possible to produce an acrylic rubber sheet highly excellent in storage stability and processability, by dehydrating the hydrous crumbs after washing to substantially free of water (specific water content), melt-kneading the acrylic rubber and a phenolic anti-aging agent and extruding the acrylic rubber in a sheet shape by using a specific screw-type extruder.

The present inventors have also found that when the polymerization conversion rate of emulsion polymerization is increased to improve the strength properties of the acrylic rubber, the gel amount sharply increases so that the processability of the acrylic rubber deteriorates, but that it was possible to eliminate the gel amount that sharply increased in the emulsion polymerization, thereby making it possible to produce an acrylic rubber sheet excellent in processability, by dehydrating the hydrous crumbs after washing to substantially free of water (specific water content), melt-kneading the acrylic rubber and a phenolic anti-aging agent and extruding the acrylic rubber in a sheet shape by using a specific screw-type extruder.

The inventors of the present invention also have found out that the storage stability and processability of the resulting acrylic rubber sheet can be significantly improved, by emulsifying a specific anti-aging agent to be added to the emulsion polymerization liquid and to adjust within specific preparing temperature and emulsifier concentration thereof, and specifying the temperature of the hydrous crumbs to be fed to the screw-type extruder.

The present inventors have completed the present invention based on these findings.

Thus, according to the present invention, there is provided an acrylic rubber sheet comprising an acrylic rubber mainly composed of a (meth) acrylic acid ester and having a weight average molecular weight (Mw) of 100,000 to 5,000,000 and a ratio (Mz / Mw) of a Z-average molecular weight (Mz) to a weight average molecular weight (Mw) is 1.3 or more, wherein the acrylic rubber sheet contains a phenolic anti-aging agent, and a gel amount of the sheet is 50% by weight or less.

In a desirable embodiment of the acrylic rubber sheet of the present invention, the acrylic rubber sheet is preferably a sheet prepared by melt-kneading.

In a desirable embodiment of the acrylic rubber sheet of the present invention, the gel amount in the sheet is preferably 15% by weight or less.

In a desirable embodiment of the acrylic rubber sheet of the present invention, a proportion of acrylic rubber in the sheet is preferably 85% by weight or more.

In a desirable embodiment of the acrylic rubber sheet of the present invention, an ash content in the sheet is preferably 0.8% by weight or less.

In a desirable embodiment of the acrylic rubber sheet of the present invention, a content of at least one element selected from the group consisting of sodium, sulfur, calcium, magnesium, and phosphorus in the ash is preferably 60% by weight or more.

In a desirable embodiment of the acrylic rubber sheet of the present invention, the phenolic anti-aging agent is preferably a hindered phenolic anti-aging agent.

In a desirable embodiment of the acrylic rubber sheet of the present invention, a melting point of the phenolic anti-aging agent is preferably 150°C or lower.

In a desirable embodiment of the acrylic rubber sheet of the present invention, a molecular weight of the phenolic anti-aging agent is preferably in the range of 100 to 1,000.

In a desirable embodiment of the acrylic rubber sheet of the present invention, the content of the phenolic anti-aging agent is preferably 0.001 to 15% by weight.

In a desirable embodiment of the acrylic rubber sheet of the present invention, the weight average molecular weight (Mw) is preferably in the range of 1,000,000 to 5,000,000.

In a desirable embodiment of the acrylic rubber sheet of the present invention, a complex viscosity ($[\eta]$ 60°C) at 60°C is preferably 15,000 Pa·s or less.

In a desirable embodiment of the acrylic rubber sheet of the present invention, a ratio ($[\eta]$ 100°C / $[\eta]$ 60°C) of a complex viscosity ($[\eta]$ 100°C) at 100°C and a complex viscosity ($[\eta]$ 60°C) at 60°C is preferably 0.5 or more.

In a desirable embodiment of the acrylic rubber sheet of the present invention, a pH is preferably 6 or less.

In a desirable embodiment of the acrylic rubber sheet of the present invention, a specific gravity is preferably 0.7 or more.

In a desirable embodiment of the acrylic rubber sheet of the present invention, a specific gravity is more preferably in the range of 0.8 to 1.4.

In a desirable embodiment of the acrylic rubber sheet of the present invention, a Mooney viscosity (ML1+4,100°C) of the acrylic rubber sheet is preferably in the range of 10 to 150.

Thus, according to the present invention, there is also provided a method for producing an acrylic rubber sheet, comprising: an emulsion polymerization process to emulsify a monomer component mainly comprising a (meth) acrylic acid ester with water and an emulsifier and to emulsion-polymerize the emulsified monomer component in the presence of a polymerization initiator up to a polymerization conversion rate of 90% by weight or more to obtain an emulsion polymerization liquid; an anti-aging agent addition process to add a phenolic anti-aging agent to the obtained emulsion polymerization liquid; a coagulation process to contact the emulsion polymerization liquid added with the anti-aging agent with a coagulant liquid to generate hydrous crumbs; a washing process to wash the generated hydrous crumbs; and a dehydration/drying/molding process to dehydrate the washed hydrous crumbs and to extrude it as a sheet-shaped dry rubber having a water content of less than 1% by weight, by using a screw-type extruder provided with a dehydration barrel having a dehydration slit, a drying barrel to dry under a reduced pressure, and a die at a tip thereof.

In a desirable embodiment of the method for producing an acrylic rubber sheet of the present invention, it is preferable that a temperature of the hydrous crumb charged into the screw-type extruder is 40°C or higher.

In a desirable embodiment of the method for producing an acrylic rubber sheet of the present invention, it is preferable that the phenolic anti-aging agent is added as a phenolic anti-aging agent-containing emulsion that is emulsified with hot water and an emulsifier.

In a desirable embodiment of the method for producing an acrylic rubber sheet of the present invention, it is preferable that the temperature of the hot water is 40°C or higher.

In a desirable embodiment of the method for producing an acrylic rubber sheet of the present invention, it is preferable that the temperature of the hot water is equal to or higher than the melting point of the phenolic anti-aging agent used.

In a desirable embodiment of the method for producing an acrylic rubber sheet of the present invention, an emulsifier concentration of the phenolic anti-aging agent-containing emulsion is preferably 1% by weight or more.

Thus, according to the present invention, there is also provided an acrylic rubber bale obtained by laminating the above acrylic rubber sheets.

According to the present invention, there is also provided a rubber mixture obtained by mixing the acrylic rubber sheet or acrylic rubber bale with a filler and a crosslinking agent.

The present invention also provides a method for producing a rubber mixture, which comprises mixing the acrylic rubber sheet or the acrylic rubber bale with a filler and a cross-linking agent using a mixer.

According to the present invention, there is also provided a method for producing a rubber mixture in which the acrylic rubber sheet or acrylic rubber bale is mixed with a filler and then a crosslinking agent is mixed.

According to the present invention, there is further provided a rubber cross-linked product obtained by cross-linking the above rubber mixture.

[EFFECT OF THE INVENTION]

According to the present invention, there are provided an acrylic rubber sheet excellent both in storage stability and in processability, a method for producing the same, an acrylic rubber bale obtained by laminating the acrylic rubber sheet, a rubber mixture obtained by mixing the acrylic rubber sheet or the acrylic rubber bale, a method for producing the same, and a rubber cross-linked product obtained by cross-linking the same.

[BRIEF DESCRIPTION OF THE DRAWINGS]

FIG. 1 is a diagram schematically showing an example of an acrylic rubber production system used for producing an acrylic rubber bale according to an embodiment of the present invention.
FIG. 2 is a diagram showing a configuration of the screw-type extruder of FIG. 1.
FIG. 3 is a diagram showing a configuration of a carrier-type cooling device used as the cooling device of FIG. 1.

[DETAILED DESCRIPTION OF EMBODIMENTS]

The acrylic rubber sheet of the present invention comprises an acrylic rubber mainly composed of (meth) acrylic acid ester and having a weight average molecular weight (Mw) of 100,000 to 5,000,000 and a ratio (Mz / Mw) of a Z-average molecular weight (Mz) and a weight average molecular weight (Mw) is 1.3 or more, wherein the acrylic rubber sheet contains a phenolic anti-aging agent, and an amount of gel is 50% by weight or less.

<Monomer Component>

The acrylic rubber constituting the acrylic rubber sheet of the present invention is mainly composed of (meth) acrylic acid ester. The proportion of the (meth) acrylic acid ester unit in the acrylic rubber is appropriately selected depending on intended purpose, but it is usually 50% by weight or more, preferably 70% by weight or more, more preferably 80% by weight or more. It should be noted that in the present invention, the term "(meth) acrylic acid ester" is used as a generic term for esters of acrylic acid and/or methacrylic acid.
The acrylic rubber constituting the acrylic rubber sheet of the present invention is preferably an acrylic rubber containing a bonding unit derived from at least one (meth) acrylic acid ester selected from the group consisting of (meth) acrylic acid alkyl ester and (meth) acrylic acid alkoxyalkyl ester which can highly improve cross-link properties of the acrylic rubber sheet.
Further, the acrylic rubber constituting the acrylic rubber sheet of the present invention which contains a monomer unit containing a reactive group in its bonding unit is preferable, since the acrylic rubber is able to be highly improved in heat resistance, compression set resistance, and the like.
Examples of the acrylic rubber constituting the acrylic rubber sheet of the present invention include an acrylic rubber composed of at least one (meth) acrylic acid ester selected from the group consisting of (meth) acrylic acid alkyl ester and (meth) acrylic acid alkoxyalkyl ester, a monomer containing a reactive group, and other copolymerizable monomers as necessary.
The (meth) acrylic acid alkyl ester is not particularly limited, but it is usually a (meth) acrylic acid alkyl ester having an alkyl group having 1 to 12 carbon atoms, preferably a (meth) acrylic acid alkyl ester having an alkyl group having 1 to 8 carbon atoms, more preferably a (meth) acrylic acid alkyl ester having an alkyl group having 2 to 6 carbon atoms.
Specific examples of the alkyl (meth) acrylate include methyl (meth) acrylate, ethyl (meth) acrylate, n-propyl (meth) acrylate, isopropyl (meth) acrylate, and n-butyl (meth) acrylate, isobutyl (meth) acrylate, n-hexyl (meth) acrylate, 2-ethylhexyl (meth) acrylate, cyclohexyl (meth) acrylate, and the like, preferably ethyl (meth) acrylate, n-butyl (meth) acrylate, and more preferably ethyl acrylate and n-butyl acrylate.
The (meth) acrylic acid alkoxyalkyl ester is not particularly limited, but it is usually a (meth) acrylic acid alkoxyalkyl ester having an alkoxyalkyl group having 2 to 12 carbon atoms, preferably a (meth) acrylic acid alkoxyalkyl ester having an alkoxyalkyl group having 2 to 8 carbon atoms, more preferably a (meth) acrylic acid alkoxyalkyl ester having an alkoxyalkyl group having 2 to 6 carbon atoms.
Specific examples of the (meth) acrylic acid alkoxyalkyl ester include methoxymethyl (meth) acrylate, methoxyethyl (meth) acrylate, methoxypropyl (meth) acrylate, methoxy butyl (meth) acrylate, ethoxymethyl (meth) acrylate, ethoxyethyl (meth) acrylate, propoxyethyl (meth) acrylate, butoxyethyl (meth) acrylate, and the like. Among these, methoxyethyl (meth) acrylate, ethoxyethyl (meth) acrylate and the like are preferable, and methoxyethyl acrylate and ethoxyethyl acrylate are more preferable.

At least one type of (meth) acrylic acid ester selected from the group consisting of these (meth) acrylic acid alkyl esters and (meth) acrylic acid alkoxyalkyl esters may be used alone or in combination of two or more types, the ratio of the (meth) acrylic acid ester in the acrylic rubber is usually in the range of 50 to 99.99% by weight, preferably 70 to 99.9% by weight, more preferably 80 to 99.5% by weight, and most preferably 87 to 99% by weight. If the amount of (meth) acrylic acid ester in the monomer component is excessively small, the weather resistance, heat resistance, and oil resistance of the resulting acrylic rubber may decrease, which is not preferable.

The reactive group-containing monomer is not particularly limited and may be appropriately selected depending on the intended purpose, but it is usually a monomer having at least one functional group selected from the group consisting of a carboxyl group, an epoxy group and a halogen group, preferably a monomer having at least one functional group selected from the group consisting of a carboxyl group, an epoxy group and a chlorine atom is more preferably a monomer having an ion reactive group such as a carboxyl group, an epoxy group, and the like, and particularly preferably a monomer having a carboxyl group.

The monomer having a carboxyl group is not particularly limited, but ethylenically unsaturated carboxylic acid can be preferably used. Examples of the ethylenically unsaturated carboxylic acid include, for example, ethylenically unsaturated monocarboxylic acid, ethylenically unsaturated dicarboxylic acid, ethylenically unsaturated dicarboxylic acid monoester, and the like, and among these, ethylenically unsaturated dicarboxylic acid monoester is particularly preferable, since the said monoester can further improve the compression set resistance property when the acrylic rubber is a rubber cross-linked product.

The ethylenically unsaturated monocarboxylic acid is not particularly limited, but an ethylenically unsaturated monocarboxylic acid having 3 to 12 carbon atoms is preferable, and examples thereof include acrylic acid, methacrylic acid, $\alpha$-ethylacrylic acid, crotonic acid, and cinnamic acid.

The ethylenically unsaturated dicarboxylic acid is not particularly limited, but an ethylenically unsaturated dicarboxylic acid having 4 to 12 carbon atoms is preferable, and examples thereof include: butendioic acid such as fumaric acid and maleic acid; itaconic acid; citraconic acid; and the like. It should be noted that the ethylenically unsaturated dicarboxylic acid also includes those which exist as an anhydride.

The ethylenically unsaturated dicarboxylic acid monoester is not particularly limited, but is usually an ethylenically unsaturated dicarboxylic acid having 4 to 12 carbon atoms and an alkyl monoester having 1 to 12 carbon atoms, preferably an ethylenically unsaturated dicarboxylic acid having 4 to 6 carbon atoms and an alkyl monoester having 2 to 8 carbon atoms, and more preferably a butendionic acid having 4 carbon atoms and an alkyl monoester having 2 to 6 carbon atoms.

Specific examples of the ethylenic unsaturated dicarboxylic acid monoester include: butenedione acid monoalkyl ester such as monomethyl fumarate, monoethyl fumarate, mono-n-butyl fumarate, monomethyl maleate, monoethyl maleate, mono-n-butyl maleate, monocyclopentyl fumarate, monocyclohexyl fumarate, monocyclohexenyl fumarate, monocyclopentyl maleate, monocyclohexyl maleate; and itaconic acid monoalkyl ester such as monomethyl itaconate, monoethyl itaconate, mono-n-butyl itaconate, monocyclohexyl itaconate, and the like. Among these, mono-n-butyl fumarate and mono-n-butyl maleate are preferable, and mono-n-butyl fumarate is particularly preferable.

Examples of the epoxy group-containing monomer include: epoxy group-containing (meth) acrylic acid esters such as glycidyl (meth) acrylate; epoxy group-containing vinyl ethers such as allyl glycidyl ether and vinyl glycidyl ether; and the like.

Examples of the monomer having a halogen group include unsaturated alcohol esters of halogen-containing saturated carboxylic acid, (meth) acrylic acid haloalkyl ester, (meth) acrylic acid haloacyloxyalkyl ester, (meth) acrylic acid (haloacetylcarbamoyloxy) alkyl ester, halogen-containing unsaturated ether, halogen-containing unsaturated ketone, halomethyl group-containing aromatic vinyl compound, halogen-containing unsaturated amide, and haloacetyl group-containing unsaturated monomer, and the like.

Examples of unsaturated alcohol esters of halogen-containing saturated carboxylic acids include vinyl chloroacetate, vinyl 2-chloropropionate, allyl chloroacetate and the like. Examples of the haloalkyl (meth) acrylate ester include chloromethyl (meth) acrylate, 1-chloroethyl (meth) acrylate, 2-chloroethyl (meth) acrylate, 1,2-dichloroethyl (meth) acrylate, 2-chloropropyl (meth) acrylate, 3-chloropropyl (meth) acrylate, 2,3-dichloropropyl (meth) acrylate, and the like. Examples of the haloacyloxyalkyl (meth) acrylate include 2-(chloroacetoxy) ethyl (meth) acrylate, 2-(chloroacetoxy) propyl (meth) acrylate, and 3-(chloroacetoxy) propyl (meth) acrylate, 3-(hydroxychloroacetoxy) propyl (meth) acrylate, and the like. Examples of the (meth) acrylic acid (haloacetylcarbamoyloxy) alkyl ester include 2-(chloroacetylcarbamoyloxy) ethyl (meth) acrylate and 3-(chloroacetylcarbamoyloxy) propyl (meth) acrylate. Examples of the halogen-containing unsaturated ether include chloromethyl vinyl ether, 2-chloroethyl vinyl ether, 3-chloropropyl vinyl ether, 2-chloroethyl allyl ether, 3-chloropropyl allyl ether and the like. Examples of halogen-containing unsaturated ketones include 2-chloroethyl vinyl ketone, 3-chloropropyl vinyl ketone, 2-chloroethyl allyl ketone, and the like. Examples of the halomethyl group-containing aromatic vinyl compound include p-chloromethylstyrene, m-chloromethylstyrene, o-chloromethylsty-

rene, p-chloromethyl-$\alpha$-methylstyrene, and the like. Examples of the halogen-containing unsaturated amide include n-chloromethyl (meth) acrylamide and the like. Examples of the haloacetyl group-containing unsaturated monomer include 3-(hydroxychloroacetoxy) propyl allyl ether, p-vinylbenzyl chloroacetic acid ester, and the like.

These reactive group-containing monomers are used alone or in combination of two or more, and the ratio in the acrylic rubber is usually 0.01 to 20% by weight, preferably 0.1 to 10% by weight, more preferably 0.5 to 5% by weight, most preferably 1 to 3% by weight.

Other monomers may be used as necessary is not particularly limited as long as it can be copolymerized with the above-mentioned monomers. Examples of the other monomers include, for example, olefin-based monomer such as aromatic vinyl, ethylenically unsaturated nitrile, acrylamide monomer, and the like. Examples of the aromatic vinyl include styrene, $\alpha$-methylstyrene, divinylbenzene and the like. Examples of the ethylenically unsaturated nitrile include acrylonitrile, methacrylonitrile, and the like. Examples of the acrylamide monomer include acrylamide, methacrylamide, and the like. Examples the of other olefinic monomers include ethylene, propylene, vinyl acetate, ethyl vinyl ether, butyl vinyl ether, and the like.

These other monomers may be used alone or in combination of two or more, and the ratio of the other monomers in the acrylic rubber is usually 0 to 30% by weight, preferably 0 to 20% by weight, more preferably 0 to 15% by weight, most preferably 0 to 10% by weight.

<Acrylic Rubber>

The acrylic rubber that constitutes the acrylic rubber sheet of the present invention is constituted by the above-mentioned monomer component, which preferably contains a monomer component having a reactive group.

The reactive group is not particularly limited, but it can be appropriately selected according to purpose of use, and when the reactive group is preferably at least one functional group selected from the group consisting of carboxyl group, epoxy group, and a halogen group, more preferably at least one functional group selected from the group consisting of carboxyl group, epoxy group, and a chlorine atom, particularly preferably carboxyl group, epoxy group, most preferably carboxyl group, it is preferable since cross-linking properties of the acrylic rubber sheet can be highly improved. The acrylic rubber having such a reactive group may be an acrylic rubber with the reactive group introduced by post-reaction, but it is preferably an acrylic rubber copolymerized with the reactive group-containing monomer.

The content of the reactive group may be appropriately selected according to the purpose of use, but when it is usually applicable in the range of 0.001% by weight or more, preferably 0.001 to 5% by weight, more preferably 0.01 to 3% by weight, particularly preferably 0.05 to 1% by weight, most preferably 0.1 to 0.5% by weight. The content mentioned above is preferable, since processability, strength characteristics, compression set resistance, oil resistance, cold resistance, and water resistance of the acrylic rubber are highly well-balanced.

The acrylic rubber constituting the acrylic rubber sheet of the present invention include at least one (meth) acrylic acid ester selected from the group consisting of (meth) acrylic acid alkyl ester and (meth) acrylic acid alkoxyalkyl ester, a monomer containing a reactive group and, if necessary, other copolymerizable monomer, and the ratio of each of the components in the acrylic rubber is such that: the bonding unit derived from at least one (meth) acrylic acid ester selected from the group consisting of (meth) acrylic acid alkyl ester and (meth) acrylic acid alkoxyalkyl ester is usually in the range of 50 to 99.99% by weight, preferably 70 to 99.9% by weight, more preferably 80 to 99.5% by weight, particularly preferably 87 to 99% by weight. The bonding unit derived from the monomer containing reactive group is usually in the range of 0.01 to 20% by weight, preferably 0.1 to 10% by weight, more preferably 0.5 to 5% by weight, particularly preferably 1 to 3% by weight; and the bonding unit derived from the other monomers is usually in the range of 0 to 30% by weight, preferably 0 to 20% by weight, more preferably 0 to 15% by weight, particularly preferably 0 to 10% by weight. It is preferable, since by setting the contents of bonding units derived from these monomers of the acrylic rubber within these ranges, the object of the present invention can be highly achieved, and further, when the acrylic rubber sheet is a cross-linked product, the water resistance and compression set resistance of the product are remarkably improved.

The weight average molecular weight (Mw) of the acrylic rubber constituting the acrylic rubber sheet of the present invention is, by an absolute molecular weight measured by GPC-MALS, within the range of 100,000 to 5,000,000, preferably 500,000 to 5,000,000, more preferably 1,000,000 to 5,000,000, particularly preferably 1,100,000 to 3,500,000, most preferably 1,200,000 to 2,500,000, it is preferable, since the processability at the time of mixing the acrylic rubber sheet, strength properties, and compression set resistance properties of the sheet are highly well-balanced.

The ratio (Mz / Mw) of the Z-average molecular weight (Mz) and the weightaverage molecular weight (Mw) of the acrylic rubber constituting the acrylic rubber sheet of the present invention is, by an absolute molecular weight distribution focusing on the high molecular weight region measured by GPC-MALS, in the range of 1.3 or more, preferably 1.4 to 5, and more preferably 1.5 to 2, it is preferable, since the processability and strength properties of the acrylic rubber bale are highly well-balanced, and changes in physical properties during storage can be mitigated.

The glass transition temperature (Tg) of the acrylic rubber constituting the acrylic rubber sheet of the present invention is not particularly limited, but is usually 20°C or lower, preferably 10°C or lower, and more preferably 0°C or lower. The lower limit value of the glass transition temperature (Tg) is not particularly limited, but it is usually -80°C or higher, preferably -60°C or higher, more preferably -40°C or higher. When the glass transition temperature (Tg) is at least the above lower limit, the oil resistance and heat resistance of the acrylic rubber can be more excellent, and when the glass transition temperature (Tg) is lower than the above upper limit, the cold resistance and processability can be more excellent.

The content of the acrylic rubber in the acrylic rubber sheet of the present invention is appropriately selected according to the purpose of use, but it is usually 85% by weight or more, preferably 90% by weight or more, more preferably 95% by weight or more, particularly preferably 97% by weight or more, most preferably 98% by weight or more. The content of the acrylic rubber itself in the acrylic rubber sheet of the present invention is almost the same as the total amount of the acrylic rubber sheet minus the ash content that could not be completely removed from the emulsifier and coagulant used and the amount of the phenolic anti-aging agent added and dispersed in the acrylic rubber sheet.

<Anti-aging Agent>

The acrylic rubber sheet of the present invention is characterized by containing a phenolic anti-aging agent.

The phenolic anti-aging agent to be used is not particularly limited as long as it is usually used as an anti-aging agent for rubber, but when it is preferably a hindered phenolic anti-aging agent, it is preferable, since the effects of storage stability and heat resistance can be highly achieved. The hindered phenolic anti-aging agent refers to a phenolic anti-aging agent having a hindered structure, and the hindered structure is a chemical structure having a bulky substituent on both sides of the phenol group, and examples of the bulky substitution on both sides include the substituent having 3 or more carbon atoms, preferably 4 carbon atoms, specifically an isobutyl group and a t-butyl group, and preferably a t-butyl group.

A melting point of the phenolic anti-aging agent is not particularly limited, but when it is usually 150°C or lower, preferably 100°C or lower, more preferably 90°C or lower, particularly preferably 80°C or lower, most preferably 70°C or lower, it is preferable, since the composition is excellent in uniform fine dispersibility with the acrylic rubber at the time of melt-kneading, and the storage stability and heat resistance of the acrylic rubber sheet can be highly improved.

The molecular weight of the phenolic anti-aging agent is not particularly limited, but when it is usually 250 to 1,000, preferably 300 to 800, more preferably 350 to 600, it is preferable, since it is excellent in a uniform fine dispersion with the acrylic rubber so that it can greatly improve the heat resistance and storage stability of the acrylic rubber sheet.

Examples of the hindered phenolic anti-aging agent include, for example, 2,6-di-t-butylphenol, 2,6-di-t-butyl-4-methylphenol, and 2,6-di-t-butyl-α-dimethylamino-p-cresol, 3-(4-hydroxy-3,5-di-t-butylphenyl) butyl propionate, 3-(4-hydroxy-3,5-di-t-butylphenyl) hexyl propionate, 3-(4-hydroxy-3,5-di-t-butylphenyl) octyl propionate, 3-(4-hydroxy-3,5-di-t-butylphenyl) decyl propionate, 3-(4-hydroxy-3,5-di-t-butylphenyl) dodecyl propionate, 3-(4-hydroxy-3,5-di-t-butylphenyl) octadecyl propionate, 3-(4-hydroxy-3,5-diisopropylphenyl) heptyl propionate, 3-(4-hydroxy-3,5-diisopropylphenyl) octyl propionate, 3-(4-hydroxy-3,5-diisopropylphenyl) dodecyl propionate, 3-(4-hydroxy)-3,5-diisopropylphenyl) octadecyl propionate, 4,4'-methylenebis(2,6-dibutylphenol), 2,6-di-t-butyl-4-(4,6-bis(octylthio)-1,3,5-triazin-2-ylamino) phenol and the like, and preferably 3-(4-hydroxy-3,5-di-t-butylphenyl) butyl propionate and 3-(4-hydroxy-3,5-di-t-butylphenyl) hexyl propionate, 3-(4-hydroxy-3,5-di-t-butylphenyl) octyl propionate, 3-(4-hydroxy-3,5-di-t-butylphenyl) decyl propionate, 3-(4-hydroxy-3,5-di-t-butylphenyl) dodecyl propionate, 3-(4-hydroxy-3,5-di-t-butylphenyl) octadecyl propionate, more preferably 3-(4-hydroxy-3,5-di-t-butylphenyl) octyl propionate, 3-(4-hydroxy-3,5-di-t-butylphenyl) decyl propionate, 3-(4-hydroxy-3,5-di-t-butylphenyl) dodecyl propionate and 3-(4-hydroxy-3,5-di-t-butylphenyl) octadecyl propionate.

Examples of the phenolic anti-aging agent other than the hindered phenolic anti-aging agent include styrenated phenols such as butylhydroxyanisole and mono (or di-or tri)(α-methylbenzyl) phenol, 2,2'-methylene-bis(6-α-methyl-benzyl-p-cresol), 2,2'-methylene-bis(4-methyl-6-t-butylphenol), alkylated bisphenol, 2,4-bis[(octylthio)methyl]-6-methylphenol, 2,2'-thiobis-(4-methyl-6-t-butylphenol), 4,4'-thiobis-(6-t-butyl-o-cresol), and the like. Among these anti-aging agents, 2,4-bis[(octylthio)methyl]-6-methylphenol is preferable.

These phenolic anti-aging agents can be used alone or in combination of two or more kinds. The content of the phenolic anti-aging agent in the acrylic rubber sheet is not particularly limited, but is usually in the range of 0.001 to 15% by weight, preferably 0.01 to 10% by weight, more preferably 0.1 to 5% by weight, particularly preferably 0.3 to 3% by weight, most preferably 0.5 to 2% by weight.

The acrylic rubber sheet of the present invention can contain other anti-aging agents other than the phenolic anti-aging agent in a range not impairing the object of the present invention.

<Acrylic Rubber Sheet>

The acrylic rubber sheet of the present invention is characterized in that it is made of the above-mentioned acrylic rubber, contains the above-mentioned anti-aging agent, and has a specific gel amount.

The thickness of the acrylic rubber sheet of the present invention is not particularly limited, but when is usually in the range of 1 to 40 mm, preferably 2 to 35 mm, more preferably 3 to 30 mm, most preferably 5 to 25 mm. The thickness described above is preferable, since workability, storage stability and productivity of the sheet are highly well-balanced. In particular, the thickness of the acrylic rubber sheet which is remarkably improved in productivity and is inexpensive is usually in the range of 1 to 30 mm, preferably 2 to 25 mm, more preferably 3 to 15 mm, and particularly preferably 4 to 12 mm.

The width of the acrylic rubber sheet of the present invention is appropriately selected according to the purpose of use, but when it is usually in the range of 300 to 1,200 mm, preferably 400 to 1,000 mm, more preferably 500 to 800 mm, such width is particularly preferable, since handleability of the sheet is excellent.

The length of the acrylic rubber sheet of the present invention is not particularly limited, but when it is usually in the range of 300 to 1,200 mm, preferably 400 to 1,000 mm, more preferably 500 to 800 mm, it is particularly preferable, since handleability is excellent.

When the amount of gel insoluble in methyl ethyl ketone in the acrylic rubber sheet of the present invention is 50% by weight or less, preferably 30% by weight or less, more preferably 20% by weight or less, further more preferably 15% by weight or less, particularly preferably 10% by weight or less, most preferably 5% by weight or less, it is preferable, since the processability is highly improved. The amount of gel insoluble in the methyl ethyl ketone in the acrylic rubber bale correlates with processability at the time of kneading by Banbury mixer or the like, but had different properties of the gel amount depending on the solvent used, and the amount of such gel does not particularly correlate with the amount of gel insoluble in THF (tetrahydrofuran).

The ash content of the acrylic rubber sheet of the present invention is not particularly limited, but when it is usually 0. 8% by weight or less, preferably 0.5% by weight or less, more preferably 0.3% by weight or less, particularly preferably 0.2% by weight or less, and most preferably 0.15% by weight or less, it is preferable, since storage stability and water resistance are excellent.

The lower limit of the ash content of the acrylic rubber sheet of the present invention is not particularly limited, but when it is usually 0.0001% by weight or more, preferably 0.0005% by weight or more, and more preferably 0.001% by weight or more, particularly preferably 0.005% by weight or more, most preferably 0.01% by weight or more, it is preferable, since stickiness to the metal surface is suppressed so that workability is excellent.

The ash content of the acrylic rubber sheet of the present invention, in which storage stability, water resistance and workability are highly well-balanced, is usually 0.0001 to 0.8% by weight, preferably 0. 0005 to 0.5% by weight, more preferably 0.001 to 0.3% by weight, particularly preferably 0.005 to 0.2% by weight, most preferably 0.01 to 0.15% by weight.

The content (total amount) of at least one element selected from the group consisting of sodium, sulfur, calcium, magnesium and phosphorus in the whole ash of the acrylic rubber sheet of the present invention is not particularly limited, but when it is usually at least 30% by weight, preferably 50% by weight or more, more preferably 60% by weight or more, particularly preferably 70% by weight or more, and most preferably 80% by weight or more with respect to the total ash content, it is preferable, since storage stability and water resistance are excellent.

The total amount of sodium and sulfur in the ash of the acrylic rubber sheet of the present invention is not particularly limited, but when it is usually 30% by weight or more, preferably 50% by weight or more, and more preferably 70% by weight or more, particularly preferably 80% by weight or more with respect to the total ash content, it is preferable, since storage stability and water resistance are excellent.

The ratio ([Na]/[S]) of sodium and sulfur in the ash of the acrylic rubber sheet of the present invention is not particularly limited, but when it is usually in the range 0.4 to 2.5, preferably 0.6 to 2, preferably 0.8 to 1.7, more preferably 1 to 1.5 by weight ratio, it is preferable, since water resistance is highly excellent.

The total amount of magnesium and phosphorus in the ash of the acrylic rubber sheet of the present invention is not particularly limited, but when it is usually 30% by weight or more, preferably 50% by weight or more, more preferably 70% by weight or more, and particularly preferably 80% by weight or more with respect to the total ash content, it is preferable, since storage stability and water resistance are excellent.

The ratio of magnesium to phosphorus ([Mg]/[P]) in the ash of the acrylic rubber sheet of the present invention is a weight ratio and is not particularly limited, but when it is usually 0.4 to 2.5, preferably 0.4 to 1.3, more preferably 0.4 to 1, particularly preferably 0.45 to 0.75, most preferably 0.5 to 0.7 by weight ratio, it is preferable, since storage stability and water resistance are excellent.

The specific gravity of the acrylic rubber sheet of the present invention is not particularly limited, but when it is usually in the range of 0.7 or more, preferably 0.8 to 1.4, more preferably 0.9 to 1.3, particularly preferably 0.95 to 1.25, most preferably 1.0 to 1.2, it is preferable, since storage stability is highly excellent.

The pH of the acrylic rubber sheet of the present invention is not particularly limited, but when it is usually in the range of 6 or less, preferably 2 to 6, more preferably 2.5 to 5.5, particularly preferably 3 to 5, it is preferable, since storage stability is highly improved.

The complex viscosity ([η] 60°C) of the acrylic rubber sheet of the present invention at 60°C is not particularly limited, but when it is usually in the range of 15,000 Pa·s or less, preferably 2,000 to 10,000 Pa·s, more preferably 2,500 to 7,000 Pa·s, most preferably 2,700 to 5,500 Pa·s, it is preferable, since processability, oil resistance and shape retention are excellent.

The complex viscosity ([η] 100°C) of the acrylic rubber sheet of the present invention at 100°C is not particularly limited, but when it is usually in the range of 1,500 to 6,000 Pa·s, preferably 2,000 to 5,000 Pa·s, more preferably 2,500 to 4,000 Pa·s, most preferably 2,500 to 3,500 Pa·s, it is preferable, since processability, oil resistance, and shape retention are excellent.

The ratio ([η] 100°C / [η] 60°C) of the complex viscosity ([η] 100°C) at 100°C to the complex viscosity ([η] 60°C) at 60°C of the acrylic rubber sheet of the present invention is not particularly limited, but it is usually 0.5 or more, preferably 0.6 or more, more preferably 0.7 or more, particularly preferably 0.8 or more, most preferably 0.83 or more. When the ratio ([η] 100°C / [η] 60°C) of the complex viscosity ([η] 100°C) at 100°C to the complex viscosity ([η] 60°C) at 60°C of the acrylic rubber sheet of the present invention is usually in the range of 0.5 to 0.99, preferably 0.6 to 0.98, more preferably 0.75 to 0.95, particularly preferably 0.8 to 0.94, most preferably 0.83 to 0.93, it is preferable, since processability, oil resistance, and shape retention are highly well-balanced.

The water content of the acrylic rubber sheet of the present invention is not particularly limited, but when it is usually less than 1% by weight, preferably 0.8% by weight or less, more preferably 0.6% by weight or less, it is preferable, since cross-link properties are optimized and the properties such as heat resistance and water resistance are highly excellent.

The Mooney viscosity (ML1+4,100°C) of the acrylic rubber sheet of the present invention is not particularly limited, but when it is usually 10 to 150, preferably 20 to 100, more preferably 25 to 70, it is preferable, since the processability and strength properties are highly well-balanced.

The type of the acrylic rubber sheet of the present invention is not particularly limited, but includes, for example, a blow sheet by a blow molding method, a cast sheet by a solution casting method, a melt-kneaded sheet by a melt extrusion method, and the like. Among them, the melt-kneaded sheet is preferable because the storage stability effect of the phenolic anti-aging agent can be maximized.

<Method for Producing Acrylic Rubber Sheet>

The method for producing the acrylic rubber sheet of the present invention is not particularly limited, but the acrylic rubber sheet can be easily produced by, for example, a method comprising: an emulsion polymerization process to emulsify a monomer component mainly composed of a (meth) acrylic acid ester with water and an emulsifier and to obtain an emulsion polymerization liquid, that is a polymer emulsion, by emulsion-polymerizing the emulsified monomer component to polymerization conversion rate 90% by weight or more in the presence of a polymerization initiator; an anti-aging agent addition process to add a phenolic anti-aging agent to the obtained emulsion polymerization liquid; a coagulation process to contact the obtained emulsion polymerization liquid added with the anti-aging agent with a coagulant liquid to generate hydrous crumbs; a washing process to wash the generated hydrous crumbs; and a dehydration/drying/molding process to dehydrate and dry the washed hydrous crumbs and to extrude a sheet-shaped dry rubber having a water content of less than 1% by weight, by using a screw-type extruder provided with a dehydration barrel having a dehydration slit, a drying barrel under reduced pressure, and a die at a top thereof.

(Emulsion Polymerization Process)

The emulsion polymerization process in the method for producing an acrylic rubber sheet of the present invention is characterized by that the steps to emulsify a monomer component mainly composed of a (meth) acrylic acid ester with water and an emulsifier, and to proceed emulsion-polymerization of the emulsified monomer component until polymerization conversion rate becomes 90% by weight or more in the presence of a polymerization initiator to obtain an emulsion-polymerized liquid.

The monomer component to be used is the same as that described in the above-mentioned monomer component and described as a preferable range, and the amount thereof may be appropriately selected to have the same monomer composition constituting the above-mentioned acrylic rubber sheet.

The emulsifier to be used in the emulsion polymerization is not particularly limited, but examples thereof include an anionic emulsifier, a cationic emulsifier, and a nonionic emulsifier, and preferably the anionic emulsifier is included.

The anionic emulsifier is not particularly limited, and examples thereof include salts of fatty acids such as myristic acid, palmitic acid, oleic acid, linolenic acid; alkyl benzenesulfonates such as sodium dodecylbenzenesulfonate; sulfate ester salts such as sodium lauryl sulfate; phosphate ester salts such as polyoxyalkylene alkyl ether phosphate ester salts; and alkyl sulfosuccinate. Among these anionic emulsifiers, phosphate ester salts and sulfate ester salts are preferable, and phosphate ester salts are particularly preferable. Preferable phosphate ester salts include, for example, sodium lauryl phosphate, potassium lauryl phosphate, sodium polyoxyalkylene alkyl ether phosphate, and the like. Examples of preferable sulfate ester salts include, for example, sodium lauryl sulfate, ammonium lauryl sulfate, sodium myristyl sulfate, sodium laureth sulfate, sodium polyoxyethylene alkyl sulfate, sodium polyoxyethylene alkylaryl sulfate, and the like. Among these, sodium lauryl sulphate is particularly preferred. These anionic emulsifiers can be used alone or in combination of two or more.

Examples of the cationic emulsifier include alkyl trimethylammonium chloride, dialkylammonium chloride, benzyl ammonium chloride and the like.

The nonionic emulsifier is not particularly limited, but examples thereof include: polyoxyalkylene fatty acid esters such as polyoxyethylene stearic acid esters; polyoxyalkylene alkyl ethers such as polyoxyethylene dodecyl ether; polyoxyalkylene alkylphenol ethers such as polyoxyethylene nonylphenyl ether; polyoxyethylene sorbitan alkyl ester. Among these, polyoxyalkylene alkyl ether and polyoxyalkylene alkylphenol ether are preferable, and polyoxyethylene alkyl ether and polyoxyethylene alkylphenol ether are more preferable.

These emulsifiers can be used alone or in combination of two or more kinds, and the amount of the emulsifiers used is usually in the range of 0.01 to 10 parts by weight, preferably 0.1 to 5 parts by weight, more preferably 1 to3 parts by weight, with respect to the monomer component 100 parts by weight.

The method for mixing the monomer component, water and the emulsifier may be according to a conventional method, and examples thereof include a method of stirring the monomer, the emulsifier and water using a stirrer such as a homogenizer or a disk turbine, and the like. The amount of water used relative to 100 parts by weight of the monomer component is usually in the range of 1 to 1,000 parts by weight, preferably 5 to 500 parts by weight, more preferably 10 to 300 parts by weight, particularly preferably 15 to 150 parts by weight, most preferably 20 to 80 parts by weight.

The polymerization catalyst used is not particularly limited as long as it is usually used in emulsion polymerization, but, for example, a redox catalyst composed of a radical generator and a reducing agent can be used.

Examples of the radical generator include peroxides and azo compounds, and peroxides are preferable. An inorganic peroxide or an organic peroxide is used as the peroxide.

Examples of the inorganic peroxides include sodium persulfate, potassium persulfate, hydrogen peroxide, ammonium persulfate and the like. Among these, potassium persulfate, hydrogen peroxide and ammonium persulfate are preferable, and potassium persulfate is particularly preferable.

The organic peroxide is not particularly limited as long as it is a known one used in emulsion polymerization. Examples of the organic peroxide include, for example, 2,2-di(4,4-di-(t-butylperoxy) cyclohexyl) propane, 1-di-(t-hexylperoxy) cyclohexane, 1,1-di-(t-butylperoxy) cyclohexane, 4,4-di-(t-butylperoxy) n-butylvalerate, 2,2-di-(t-butylperoxy) butane, t-butyl hydroperoxide, cumene hydroperoxide, diisopropylbenzene hydroperoxide, paramenthane hydroperoxide, benzoyl peroxide, 1,1,3,3-tetraethyl butyl hydroperoxide, t-butyl cumyl peroxide, di-t-butyl peroxide, di-t-hexyl peroxide, di(2-t-butylperoxyisopropyl) benzene, dicumyl peroxide, diisobutyryl peroxide, di(3,5,5-trimethylhexanoyl) peroxide, dilauroyl peroxide, disuccinic acid peroxide, dibenzoyl peroxide, di(3-methylbenzoyl) peroxide, benzoyl (3-methylbenzoyl) peroxide, diisobutyryl peroxydicarbonate, di-n-propyl peroxydicarbonate, di(2-ethylhexyl) peroxydicarbonate, di-sec-butylperoxydicarbonate, 1,1,3,3-tetramethylbutylperoxyneodecanate, t-hexylperoxypivalate, t-butylperoxyneodecanate, t-hexylperoxypivalate, t-butylperoxypivalate, 2,5-dimethyl-2,5-di(2-ethylhexanoylperoxy) hexane, 1,1,3,3-tetramethylbutylperoxy-2-ethylhexanate, t-hexylperoxy-2-ethylhexanate, t-butylperoxy-3,5,5-trimethylhexanate, t-hexylperoxyisopropyl monocarbonate, t-butylperoxyisopropyl monocarbonate, t-butylperoxy-2-ethylhexyl monocarbonate, 2,5-dimethyl-2,5-di(benzoylperoxy) hexane, t-butylperoxyacetate, t-hexylperoxybenzoate, t-butyl peroxybenzoate, 2,5-dimethyl-2,5-di(t-butylperoxy) hexane. Among these, diisopropylbenzene hydroperoxide, cumene hydroperoxide, paramenthane hydroperoxide, benzoyl peroxide and the like are preferable.

Examples of the azo compound include, for example, azobisisoptyronitrile, 4,4'-azobis (4-cyanovaleric acid), 2,2'-azobis [2-(2-imidazolin-2-yl) propane, 2,2'-azobis (propane-2-carboamidine), 2,2'-azobis [N-(2-carboxyethyl)-2-methylpropanamide], 2,2'-azobis {2-[1-(2-hydroxyethyl)-2-imidazoline-2-yl] propane}, 2,2'-azobis (1-imino-1-pyrrolidino-2-methylpropane) and 2,2'-azobis {2-methyl-N-[1,1-bis (hydroxymethyl)-2-hydroxyethyl] propanamide}, and the like.

These radical generators may be used alone or in combination of two or more, and the amount thereof is usually in the range of 0.0001 to 5 parts by weight, preferably 0.0005 to 1 part by weight, more preferably 0.001 to 0.5 part by weight with respect to 100 parts by weight of the monomer component.

The reducing agent can be used without particular limitation as long as it is used in a redox catalyst for emulsion polymerization, but in the present invention, it is particularly preferable to use at least two reducing agents. As the at least two reducing agents, for example, a combination of a metal ion compound in a reduced state and another reducing agent is preferable.

The metal ion compound in the reduced state is not particularly limited, and examples thereof include ferrous sulfate, sodium hexamethylenediamine iron tetraacetate, cuprous naphthenate, and the like, and among these, ferrous sulfate is preferable. These metal ion compounds in a reduced state can be used alone or in combination of two or more, and the amount of the metal ion component used with respect to 100 parts by weight of the monomer component is usually in the range of 0.000001 to 0.01 parts by weight, preferably 0.00001 to 0.001 parts by weight, more preferably 0.00005 to 0.0005 parts by weight.

The reducing agent other than the metal ion compound in the reduced state is not particularly limited, but examples thereof include: ascorbic acids such as ascorbic acid, sodium ascorbate, potassium ascorbate or a salt thereof; erythorbic acids such as erythorbic acid, sodium erythorbate, potassium erythorbate or a salt thereof; sulfinic acid salts such as sodium hydroxymethanesulfinate; sulfites such as sodium sulfite, potassium sulfite, sodium bisulfite, aldehyde sodium bisulfite, potassium bisulfite; pyrosulfites such as sodium pyrosulfite, potassium pyrosulfite, sodium hydrogensulfite, potassium hydrogensulfite and the like; thiosulfates such as sodium thiosulfate and potassium thiosulfate; phosphorous acid such as phosphorous acid, sodium phosphite, potassium phosphite, sodium hydrogen phosphite and potassium hydrogen phosphite, or salts thereof; pyrophosphite such as pyrophosphite, sodium pyrophosphite, potassium pyrophosphite, sodium hydrogen pyrophosphite, potassium hydrogen pyrophosphite, or a salt thereof; sodium formaldehyde sulfoxylate, and the like. Among these, ascorbic acid, or a salt thereof, sodium formaldehyde sulfoxylate and the like are preferable, and ascorbic acid or a salt thereof is particularly preferable.

These reducing agents other than the metal ion compound in the reduced state can be also used alone or in combination of two or more, and the amount used with respect to 100 parts by weight of the monomer component is usually in the range of 0.001 to 1 part by weight, preferably 0.005 to 0.5 part by weight, more preferably 0.01 to 0.3 part by weight.

A preferable combination of the metal ion compound in the reduced state and the other reducing agent is the combination of ferrous sulfate and ascorbic acid or a salt thereof and / or sodium formaldehyde sulfoxylate, more preferably a combination of ferrous sulfate with ascorbate and / or sodium formaldehyde sulfoxylate, most preferably a combination of ferrous sulfate and ascorbate. The amount of ferrous sulfate used with respect to 100 parts by weight of the monomer component at this time is usually in the range of 0.000001 to 0.01 parts by weight, preferably 0.00001 to 0.001 parts by weight, more preferably 0.00005 to 0.0005 parts by weight, and the amount of ascorbic acid or a salt thereof and / or sodium formaldehyde sulfoxylate used with respect to 100 parts by weight of the monomer component is usually in the range of 0.001 to 1 part by weight, preferably 0.005 to 0.5 part by weight, more preferably 0.01 to 0.3 part by weight.

The amount of water to be used with respect to 100 parts by weight of the monomer component in the emulsion polymerization reaction may be only that used for the emulsion of the above-mentioned monomer component, but it is usually in the range of 10 to 1,000 parts by weight, preferably 50 to 500 parts by weight, more preferably 80 to 400 parts by weight, most preferably 100 to 300 parts by weight.

The emulsion polymerization reaction may be a conventional method, and may be a batch method, a semi-batch method, or a continuous method. The polymerization temperature and the polymerization time are not particularly limited and can be appropriately selected depending on the type of the polymerization initiator used and the like. The polymerization temperature is usually 0 to 100°C, preferably 5 to 80°C, more preferably 10 to 50°C, and the polymerization time is usually 0.5 to 100 hours, preferably 1 to 10 hours.

The polymerization conversion rate of the emulsion polymerization reaction is not particularly limited, but the acrylic rubber sheet produced when the polymerization conversion rate is usually 80% by weight or more, preferably 90% by weight or more, more preferably 95% by weight or more, is preferable since the acrylic rubber sheet is excellent in strength properties and free of monomer odor. A polymerization terminator may be used for termination of the polymerization.

(Anti-aging Agent Addition Process)

The anti-aging agent addition process in the method for producing an acrylic rubber sheet of the present invention is characterized by adding a phenolic anti-aging agent to the emulsion polymerization liquid after the emulsion polymerization described above.

The amount of the phenolic anti-aging agent used may be appropriately selected so as to be the content of the phenolic anti-aging agent in the acrylic rubber sheet of the present invention described above, and it is, with respect to 100 parts by weight of the monomer component, usually in the range of 0.001 to 15 parts by weight, preferably 0.01 to 10 parts by weight, more preferably 0.1 to 5 parts by weight, particularly preferably 0.3 to 3 parts by weight, most preferably 0.5 to 2 parts by weight.

The method for adding the phenolic anti-aging agent to the emulsion polymerization liquid is not particularly limited, but, it is preferable, for example, that a phenolic anti-aging agent is emulsified with an emulsifier and water then the emulsion containing anti-aging agent is supplied to the polymerization liquid, since the anti-aging agent can be easily dispersed in the acrylic rubber and further finely dispersed in the screw-type extruder to maximize the anti-aging effect.

The method for emulsifying the phenolic anti-aging agent is not particularly limited, but it can usually produce an emulsion with water and an emulsifier and then the phenolic anti-aging agent is added and stirred until uniformly dispersed.

The water for emulsifying the phenolic anti-aging agent is preferably hot water, and when the temperature is usually 40°C or higher, preferably 50 to 90°C, more preferably 60 to 80°C, it is desirable, since the phenolic anti-aging agent can be easily emulsified and uniformly dispersed.

Further, when the temperature of water for emulsifying the phenolic anti-aging agent is equal to or higher than the melting point of the phenolic anti-aging agent used, preferably the melting point +5°C or higher, more preferably the melting point +10°C or higher, it is preferable, since the phenolic anti-aging agent can be easily emulsified and uniformly dispersed.

The emulsifier for emulsifying the phenolic anti-aging agent is not particularly limited, but it is preferable that the emulsifier for emulsifying the phenolic anti-aging agent is the same as emulsifier to be used when emulsifying the monomer component, since acrylic rubber can be stably isolated in subsequent processes. Specific examples thereof include anionic emulsifiers, cationic emulsifiers and nonionic emulsifiers, preferably anionic emulsifiers, more preferably phosphoric acid ester salt and sulfuric acid ester salt, particularly preferably phosphoric acid ester salt.

The amount of the emulsifier used for emulsifying the phenolic anti-aging agent may be appropriately selected depending on the molecular weight, melting point, SP value and the like of the anti-aging agent to be used, but when it is, with respect to the emulsification liquid composed of water and emulsifier usually, 1% by weight or more, preferably 2 to 40% by weight, more preferably 3 to 30% by weight, particularly preferably 4 to 20% by weight, and most preferably 5 to 15% by weight, it is preferable, since the phenolic anti-aging agent can be easily emulsified and uniformly dispersed.

The stirring time for emulsifying the phenolic anti-aging agent is the time until the anti-aging agent is uniformly dispersed, which is not particularly limited, but the stirring time is usually in the range of 1 hour or more, preferably 1 to 5 hours, preferably 1 to 4 hours, more preferably 1 to 3 hours.

In the emulsion containing a phenolic anti-aging agent added to the emulsion polymerization liquid thus obtained, the phenolic anti-aging agent is uniformly dispersed. The uniform dispersibility of the phenolic anti-aging agent in the emulsion containing the phenolic anti-aging agent can be determined as follows, for example. After once filling a glass container with an emulsion containing the phenolic anti-aging agent, and then removing the emulsion, and allowing the glass container to stand still, the emulsion containing the phenolic anti-aging agent is observed on the wall surface of the glass container after it has dropped on the wall surface. If the surface is not dirty, it can be judged that those having a uniform dispersion are good, and, however, if any white powder attached thereto is observed, it is judged as defective in a uniform dispersion. The emulsion containing the phenolic anti-aging agent, which has been once uniformly dispersed, rarely re-coagulates even when it is allowed to stand, but when it becomes poorly dispersed, it can be stirred again to be re-adjusted for use.

The content of the phenolic anti-aging agent in the emulsion containing the phenolic anti-aging agent is appropriately selected according to the purpose of use, but when it is usually in the range of 10 to 80% by weight, preferably 20 to 60% by weight, more preferably 30 to 45% by weight, it is preferable, since storage stability and heat resistance of the acrylic rubber sheet can be highly improved.

The emulsifier concentration of the emulsion containing the phenolic anti-aging agent is not particularly limited, but when it is usually in the range of 1% by weight or more, preferably 1 to 30% by weight, more preferably 2 to 20% by weight, particularly preferably 3 to 15% by weight, most preferably 5 to 10% by weight, it is preferable, since storage stability, heat resistance and water resistance of the acrylic rubber sheet can be highly well-balanced.

The pH of the emulsion containing the phenolic anti-aging agent is not particularly limited, but when it is usually in the range of 6 or less, preferably 2 to 6, more preferably 3 to 6, it is preferable, since storage stability and heat resistance of the acrylic rubber sheet are highly excellent.

The method for adding the phenolic anti-aging agent or the emulsion containing phenolic anti-aging agent to the emulsion polymerization liquid is not particularly limited and may be a conventional method.

(Coagulation Process)

The coagulation process in the method for producing an acrylic rubber of the present invention is a process to contact the emulsion polymerization liquid added with above-mentioned phenolic anti-aging agent with the coagulant liquid to generate hydrous crumbs.

The solid content concentration of the emulsion polymerization liquid used in the coagulation process is not particularly limited, but it is usually adjusted to be in the range of 5 to 50% by weight, preferably 10 to 45% by weight, more preferably 20 to 40% by weight.

The coagulant to be used is not particularly limited, but a metal salt is usually used. Examples of the metal salt include, for example, metal salts such as alkali metal salt, periodic table group 2 metal salt, other metal salts, and the like, preferably alkali metal salt and periodic table group 2 metal salt, more preferably periodic table group 2 metal salt, particularly preferably magnesium salt.

Examples of the alkali metal salt include, for example: sodium salts such as sodium chloride, sodium nitrate, sodium sulphate, and the like; potassium salts such as potassium chloride, potassium nitrate, potassium sulfate, and the like; lithium salts such as lithium chloride, lithium nitrate, lithium sulfate, and the like. Among these, sodium salts are preferable, sodium chloride and sodium sulfate are particularly preferable.

Examples of the periodic table group 2 metal salt include, for example: magnesium chloride, calcium chloride, magnesium nitrate, calcium nitrate, magnesium sulfate, calcium sulfate, and the like, preferably calcium chloride, magnesium sulfate.

Examples of the other metal salt include, for example: zinc chloride, titanium chloride, manganese chloride, iron chloride, cobalt chloride, nickel chloride, aluminum chloride, tin chloride, zinc nitrate, titanium nitrate, manganese nitrate, iron nitrate, cobalt nitrate, nickel nitrate, aluminum nitrate, tin nitrate, zinc sulfate, titanium sulfate, manganese sulfate, iron sulfate, cobalt sulfate, nickel sulfate, aluminum sulfate, tin sulfate, and the like.

These coagulates can be used alone or in combination of two or more, and the amount thereof with respect to 100 parts by weight of the monomer component is usually in the range of 0.01 to 100 parts by weight, preferably 0.1 to 50 parts by weight, more preferably 1 to 30 parts by weight. When the coagulant is within this range, it is preferable, since the compression set resistance and the water resistance when the acrylic rubber sheet is cross-linked can be highly improved while the acrylic rubber is sufficiently coagulated.

When the concentration of the coagulant in the coagulant liquid to be used is usually in the range of 0.1 to 20% by weight, preferably 0.5 to 15% by weight, more preferably 1 to 10% by weight, particularly preferably 1.5 to 5% by weight, it is preferable, since the particle size of the hydrous crumbs generated are uniform and can be focused in a specific region.

The temperature of the coagulant liquid is not particularly limited, but when it is usually within a range of 40°C or higher, preferably 40 to 90°C, and more preferably 50 to 80°C, it is preferable, since uniform hydrous crumbs are generated.

The contact between the emulsion polymerization liquid and the coagulant liquid is not particularly limited, but, for example, a method of adding the emulsion polymerization liquid to the coagulant liquid being stirred, a method for adding the coagulant liquid to the emulsion polymerization liquid being stirred, and the like, but the method of adding the emulsion polymerization liquid to the coagulant liquid being stirred is preferable, since the shape of the hydrous crumbs to be generated and the crumb diameter are uniform and are focused in a specific region, so that the washing efficiency of the emulsifier and the coagulant can be remarkably improved.

The stirring speed (rotation speed) of the coagulant liquid being stirred, is expressed by the rotation speed of the stirring blade of the stirring device arranged in the coagulation tank, but it is usually in the range of 100 rpm or higher, preferably 200 to 1,000 rpm, more preferably 300 to 900 rpm, and particularly preferably 400 to 800 rpm.

It is preferable that the rotation speed is maintained at such violently rotation speed, as the coagulant liquid is stirred violently to such an extent that the particle size of the hydrous crumbs to be generated can be made small and uniform. Generation of crumbs having excessively large and small particles can be suppressed by setting the rotation speed to the above-mentioned lower limit or higher, and the coagulation reaction can be more easily controlled by controlling the amount to be equal to or less than the above-mentioned upper limit.

The peripheral speed of the coagulant liquid being stirred is expressed by the speed of the outer circumference of the stirring blade of the stirring device arranged in the coagulation tank. It is preferable that stirring vigorously increases to a certain extent, since the particle size of the hydrous crumbs to be generated can be made smaller and uniform. The peripheral speed is usually 0.5 m/s or greater, preferably 1 m/s or greater, more preferably 1.5 m/s or greater, particularly preferably 2 m/s or greater, and most preferably 2.5 m/s or greater. On the other hand, although the upper limit of the peripheral speed is not particularly limited, when the peripheral speed is usually 50 m/s or lower, preferably 30 m/s or lower, more preferably 25 m/s or lower, and most preferably 20 m/s or lower, it is preferable, since the coagulation reaction can be easily controlled.

By specifying the above conditions of the coagulation reaction in the coagulation process (contact method, solid content concentration of emulsion polymerization liquid, concentration and temperature of the coagulant liquid, rotation speed and peripheral speed during stirring of the coagulant liquid) in a specific range, the shape and crumb diameter of the hydrous crumbs to be generated are uniform and focused within a specific region, and the removal of emulsifiers and coagulants during washing and dehydration efficiency are significantly improved, which is preferable.

(Washing Process)

The washing method is not particularly limited and may be a conventional method. For example, the generated hydrous crumbs can be washed by mixing with a large amount of water.

The amount of water to be used is not particularly limited, but when the amount of water with respect to 100 parts by weight of the above-mentioned monomer component per one washing is usually in the range of 50 parts by weight or more, preferably 50 to 15,000 parts by weight, more preferably 100 to 10,000 parts by weight, particularly preferably 150 to 5,000 parts by weight, it is preferable, since the ash content in the acrylic rubber can be effectively reduced during the washing.

The temperature of the water to be used in the washing process is not particularly limited, but when it is usually in the range of 40°C or higher, preferably 40 to 100°C, more preferably 50 to 90°C, most preferably 60 to 80°C, it is preferable, since the washing efficiency is remarkably raised.

By setting the water temperature at or above the above-mentioned lower limit, the emulsifier and the coagulant are separated from the hydrous crumbs, so that the washing efficiency improves.

The washing time is not particularly limited, but it is usually in the range of 1 to 120 minutes, preferably 2 to 60 minutes, more preferably 3 to 30 minutes.

The number of washings is not limited, but is usually 1 to 10 times, preferably a plurality of times, more preferably 2 to 3 times. From the viewpoint of reducing the residual amount of the coagulant in the finally obtained acrylic rubber sheet, it is desirable that the number of times of washing is large, but as described above, the number of washings can be remarkably reduced by specifying the shape of the hydrous crumbs and the hydrous crumb diameter and or specifying the washing temperature within the above-mentioned range.

(Dehydration/Drying/Molding Process)

The dehydration/drying/molding process in the method for producing an acrylic rubber sheet of the present invention is characterized by that the above-described washed hydrous crumbs are dehydrated to a water content of 1 to 40% by weight in a dehydration barrel, and the dehydrated hydrous crumbs are dried to obtain a dry rubber having a water content of less than 1% by weight, and the sheet-shaped dry rubber is extruded from a die, by using a screw-type extruder provided with the dehydration barrel having a dehydration slit, the drying barrel under reduced pressure, and the die at a top thereof.

In the present invention, as mentioned above, the hydrous crumbs to be supplied to the screw-type extruder is preferably separated from free water by a drainer after washing.

Draining Process

In the method for producing an acrylic rubber sheet, in order to improve the dehydration efficiency, it is preferable to provide a draining process to separate the free water from the hydrous crumbs after washing after the above-described washing process and prior to the hydration/drying/molding process.

As the drainer, known ones can be used without particular limitation, and examples thereof include a wire mesh, a screen, an electric sifter, and the like, and among these, the wire mesh and the screen are preferable.

The opening of the strainer is not particularly limited, but when it is usually in the range of 0.01 to 5 mm, preferably 0.1 to 1 mm, more preferably 0.2 to 0.6 mm, it is preferable, since the loss of hydrous crumbs is small and the straining can be performed efficiently.

The water content of the hydrous crumbs after straining, which is the water content of the hydrous crumbs to be supplied to the dehydration/drying/molding process is not particularly limited, but it is usually in the range of 50 to 80% by weight, preferably 50 to 70% by weight, more preferably 50 to 60% by weight.

The temperature of the hydrous crumbs after straining, which is the temperature of the hydrous crumbs to be supplied to the dehydration/drying/molding process is not particularly limited, but when it is usually in the range of 40°C or higher, preferably 40 to 100°C, more preferably 50 to 90°C, particularly preferably 55 to 85°C, most preferably 60 to 80°C, it is preferable, since the hydrous crumbs, having a high specific heat of 1.5 to 2.5 KJ/kg·K and are hard to raise the temperature like the acrylic rubber of the present invention, can be efficiently dehydrated and dried by the screw-type extruder.

Dehydration of Hydrous Crumbs (Dehydration Barrel section)

Dehydration of hydrous crumbs is performed in a dehydration barrel having a dehydration slit provided in the screw-type extruder. The opening of the dehydration slit may be appropriately selected according to conditions of use, but when the opening is usually in the range of 0.01 to 5 mm, preferably 0.1 to 1 mm, more preferably 0.2 to 0.6 mm, it is preferable, since loss of the hydrous crumbs is small, and dehydration of the hydrous crumbs can be efficiently performed.

The number of dehydration barrels in the screw-type extruder is not particularly limited, but when the number is usually plural, preferably 2 to 10, more preferably 3 to 6, it is preferable from the viewpoint of efficient dehydration of the sticky acrylic rubber.

There are two types of dehydration from the hydrous crumbs in the dehydration barrel: liquid removal from the dehydration slit (drainage) and steam removal (steam exhausting). In the present invention, the drainage is defined as dehydration, and the steam exhausting is defined as preliminary drying, so that they can be distinguished.

When using a screw-type extruder provided with a plurality of dehydration barrels, it is preferable to combine drainage and steam exhausting because it is possible to efficiently dehydrate the sticky acrylic rubber and reduce the moistures content. The selection of each dehydration barrel to be a drainage type dehydration barrel or a steam exhausting type dehydration barrel of a screw-type extruder having three or more dehydration barrels may be appropriately made according to the purpose of use, but in order to reduce the ash content in acrylic rubber sheet that is usually produced, the number of drainage type barrels is increased, and in order to reduce the water content, the number of steam exhausting type barrels is increased.

The set temperature of the dehydration barrel is appropriately selected depending on the monomer composition of acrylic rubber, the ash content, the water content, the operating conditions, and the like, but it is usually in the range of 60 to 150°C, preferably 70 to 140°C, more preferably 80 to 130°C. The set temperature of the dehydration barrel for dehydration in the drainage state is usually in the range of 60 to 120°C, preferably 70 to 110°C, more preferably 80 to 100°C. The set temperature of the dehydration barrel for preliminarily drying in the steam exhausting state is usually in the range of 100 to 150°C, preferably 105 to 140°C, more preferably 110 to 130°C.

The water content after the drainage-type dehydration to squeeze water from the hydrous crumbs is not particularly limited, but when it is usually 1 to 45% by weight, preferably 1 to 40% by weight, more preferably 5 to 35% by weight, particularly preferably 10 to 35% by weight, most preferably 15 to 35% by weight, it is preferable, since the productivity and the ash removal efficiency are highly well-balanced.

When the dehydration is performed by a centrifuge or the like, dehydration of the sticky acrylic rubber can be hardly done because the acrylic rubber adheres to the dehydration slit portion (the water content is up to about 45 to 55% by weight). In the present invention, it is preferable to use a screw-type extruder having a dehydrating slit and forcibly squeezes water by a screw, since the water content came to be reduced up to said content.

When the drainage-type dehydration barrel and the steam-exhausting-type dehydration barrel are provided, the removal of water and moisture from the hydrous crumbs after the dehydration in the drainage-type dehydration barrel section is usually 5 to 45% by weight, preferably 10 to 40% by weight, more preferably 15 to 35% by weight, and the water content of the hydrous crumbs after the preliminary drying in the steam-exhausting-type dehydration barrel section is usually 1 to 30% by weight, preferably 3 to 20% by weight, more preferably 5 to 15% by weight.

By setting the water content after dehydration to the above lower limit or more, the dehydration time can be shortened and the deterioration of acrylic rubber can be suppressed, and by setting it to the above upper limit or less, the ash content can be sufficiently reduced.

Drying of the Hydrous Crumbs (Drying Barrel section)

Drying of the hydrous crumbs after the above-described dehydration is characterized in that the hydrous crumbs are dried by the drying barrel section, which is equipped in the extruder, under reduced pressure.

The degree of pressure reduction of the drying barrel may be appropriately selected, but when it is usually 1 to 50 kPa, preferably 2 to 30 kPa, and more preferably 3 to 20 kPa, it is preferable, since the hydrous crumbs can be efficiently dried.

The set temperature of the drying barrel may be appropriately selected, but when the temperature is usually in the range of 100 to 250°C, preferably 110 to 200°C, more preferably 120 to 180°C, it is preferable, since there is no burning or deterioration of the acrylic rubber, so that the acrylic rubber is efficiently dried and the amount of gel in the acrylic rubber sheet can be reduced.

The number of drying barrels in the screw-type extruder is not particularly limited, but is usually plural, preferably 2 to 10, and more preferably 3 to 8. The degree of pressure reduction in the case of having a plurality of drying barrels may be a degree of pressure reduction similar to that of all the drying barrels, or it may vary by the drying barrel. The set temperature in the case of having multiple drying barrels may be similar to that of all the drying barrels or it may vary by the drying barrel, but when the temperature of the discharge portion (closer to the die) is set higher than the temperature of the introduction portion (closer to the dehydration barrel), it is preferable, since the drying efficiency can be increased.

The water content of the dried rubber after drying in the drying barrel section is usually less than 1% by weight, preferably 0.8% by weight or less, and more preferably 0.6% by weight or less. In the present invention, it is particularly preferable that the phenolic anti-aging agent and acrylic rubber are melt-kneaded and extruded while the water content of the dry rubber take this value (a state in which water is almost removed) in the screw-type extruder, since an acrylic rubber sheet having highly improved storage stability and heat resistance can be produced. In the present invention, it is preferable that the acrylic rubber is melt-kneaded in a state in which water is almost removed, since the amount of gel insoluble in methyl ethyl ketone of the acrylic rubber can be reduced and the processability of the acrylic rubber sheet is remarkably improved.

Dry Rubber (Die Portion)

The dry rubber dehydrated/dried by the screw portions of the dehydration barrel and the drying barrel is sent to a screwless straightening die portion. A breaker plate or a wire net may or may not be provided between the screw portion and the die portion.

The extruded dry rubber is obtained by extruding from the die preferably having a substantially rectangular shape so that the dry rubber is extruded in a sheet shape, thereby the dry rubber having less entrapment of air and a large specific gravity of the extruded sheet and excellent in storage stability can be obtained.

The resin pressure in the die portion is not particularly limited, but when the resin pressure is usually in the range of 0.1 to 10 MPa, preferably 0.5 to 5 MPa, more preferably 1 to 3 MPa, it is preferable, since air entrapment is small (specific gravity is large) and the productivity is excellent.

Screw-Type Extruder and Operating Conditions

The screw length (L) of the screw-type extruder to be used may be appropriately selected according to the purpose of use, but it is usually in the range of 3,000 to 15,000 mm, preferably 4,000 to 10,000 mm, more preferably 4,500 to 8,000 mm.

The screw diameter (D) of the screw-type extruder to be used may be appropriately selected according to the purpose of use, but it is usually in the range of 50 to 250 mm, preferably 100 to 200 mm, more preferably 120 to 160 mm.

The ratio (L / D) of the screw length (L) to the screw diameter (D) of the screw-type extruder to be used is not particularly limited, but when it is usually in the range of 10 to 100, preferably 20 to 80, more preferably 30 to 60, it is preferable, since the water content can be less than 1% by weight without lowering the molecular weight of the dried rubber or causing burns.

The rotation speed (N) of the screw-type extruder to be used may be appropriately selected according to various conditions, but when it is usually in the range of 10 to 1,000 rpm, preferably 50 to 750 rpm, more preferably 100 to 500 rpm, most preferably 120 to 300 rpm, it is preferable, since the water content and the gel amount of the acrylic rubber can be efficiently reduced.

The extrusion rate (Q) of the screw-type extruder to be used is not particularly limited, but it is usually in the range of 100 to 1,500 kg/hr, preferably 300 to 1,200 kg/hr, more preferably 400 to 1,000 kg/hr, most preferably 500 to 800 kg/hr.

The ratio (Q / N) of the extrusion rate (Q) and the number of revolutions (N) of the screw-type extruder used is not particularly limited, but it is usually in the range of 2 to 10, preferably 3 to 8, and more preferably 4 to 6.

Sheet-Shaped Dry Rubber

The shape of the dry rubber extruded from the screw-type extruder is sheet-shaped, which is preferable, because air is not entrapped when the dry rubber is extruded, so that the specific gravity is large, thereby highly improving storage stability. The sheet-shaped dry rubber extruded from the screw-type extruder is preferably cut after being cooled to be used as an acrylic rubber sheet.

The thickness of the sheet-shaped dry rubber extruded from the screw-type extruder is not particularly limited, but when it is usually in the range of 1 to 40 mm, preferably 2 to 35 mm, more preferably 3 to 30 mm, and most preferably 5 to 25 mm, it is preferable, since it has excellent workability and productivity. In particular, since the thermal conductivity of the sheet-shaped dry rubber is as low as 0.15 to 0.35 W/mK, when the cooling efficiency is increased and the productivity is remarkably improved, the thickness of the sheet-shaped dry rubber is usually in the range of 1 to 30 mm, preferably 2 to 25 mm, more preferably 3 to 15 mm, and particularly preferably 4 to 12 mm.

The width of the sheet-shaped dry rubber extruded from the screw-type extruder is appropriately selected according to the purpose of use, but it is usually in the range of 300 to 1,200 mm, preferably 400 to 1,000 mm, more preferably 500 to 800 mm.

The temperature of the dry rubber extruded from the screw-type extruder is not particularly limited, but it is usually in the range of 100 to 200°C, preferably 110 to 180°C, more preferably 120 to 160°C.

The water content of the dry rubber extruded from the screw-type extruder is not particularly limited, but it is usually less than 1% by weight, preferably 0.8% by weight or less, more preferably 0.6% by weight or less.

The complex viscosity ($[\eta]$ 100°C) at 100°C of the sheet-shaped dry rubber extruded from the screw-type extruder is not particularly limited, but when it is usually in the range of 1,500 to 6,000 Pa·s, preferably 2,000 to 5,000 Pa·s, more preferably 2,500 to 4,000 Pa·s, and most preferably 2,500 to 3,500 Pa·s, it is preferable, since the extrudability and shape retention as a sheet are highly well-balanced. This means that, when the value of the complex viscosity ($[\eta]$ 100°C) at 100°C is higher than the lower limit or higher, the extrudability can be more excellent, and when the value is lower than the upper limit or lower, collapse and breakage of the shape of the sheet-shaped dry rubber can be suppressed.

The sheet-shaped dry rubber extruded from the screw-type extruder may be folded to be used, but preferably cut to be used.

The cutting of the sheet-shaped dry rubber is not particularly limited, but since the acrylic rubber of the acrylic rubber sheet of the present invention has strong stickiness, it is preferable that the sheet-shaped dry rubber is cut after cooling the same in order to continuously cut without entrapping air.

The cutting temperature of the sheet-shaped dry rubber is not particularly limited, but when the temperature is usually 60°C or lower, preferably 55°C or lower, more preferably 50°C or lower, it is preferable, since the cutting property and the productivity are highly well-balanced.

The complex viscosity ([η] 60°C) at 60°C of the sheet-shaped dry rubber is not particularly limited, but when it is usually 15,000 Pa·s or less, preferably 2,000 to 10,000 Pa·s, more preferably 2,500 to 7,000 Pa·s, and most preferably 2,700 to 5,500 Pa·s, it is preferable, since the cutting can be done continuously without entrapping air.

The ratio ([η] 100°C / [η] 60°C) of the complex viscosity ([η] 100°C) at 100°C to the complex viscosity ([η] 60°C) at 60°C of the sheet-shaped dry rubber is not particularly limited, but when it is usually in the range of 0.5 or more, preferably 0.6 to 0.98, more preferably 0.75 to 0.95, particularly preferably 0.8 to 0.94, most preferably 0.83 to 0.93, it is preferable, since air entrapment is low, and cutting and productivity are highly well-balanced.

The method for cooling the sheet-shaped dry rubber is not particularly limited and may be left at room temperature. However, since the sheet-shaped dry rubber has a very low thermal conductivity of 0.15 to 0.35 W/mK, forced cooling such as an air-cooling method under ventilation or cooling, a water-spraying method for spraying water, or a dipping method for immersing in water is preferable for improving productivity, and the air cooling method under ventilation or cooling is particularly preferable.

By the air-cooling method for dry rubber sheets, for example, the sheet-shaped dry rubber can be extruded from a screw-type extruder onto a conveyor such as a belt conveyor and conveyed while being cooled by blowing cold air, so that the sheet-shaped dry rubber can be cooled. The temperature of the cold air is not particularly limited, but is usually in the range of 0 to 25°C, preferably 5 to 25°C, more preferably 10 to 20°C. The length to be cooled is not particularly limited, but it is usually 5 to 500 m, preferably 10 to 200 m, more preferably 20 to 100 m. Although the cooling rate of the sheet-shaped dry rubber is not particularly limited, when it is usually in the range of 50°C/hr or higher, more preferably 100°C/hr or higher, more preferably 150°C/hr or higher, it is preferable, since it is particularly easy to cut.

The cutting length of the sheet-shaped dry rubber is not particularly limited and may be appropriately selected according to the purpose of use, but it is usually in the range of 100 to 800 mm, preferably 200 to 500 mm, more preferably 250 to 450 mm.

The acrylic rubber sheet thus obtained is superior to the crumb-shaped acrylic rubber in operability and storage stability, so that it can be used as it is or laminated and baled to be used.

<Acrylic rubber bale>

The acrylic rubber bale of the present invention is characterized in that it is obtained by laminating the acrylic rubber sheets and integrated. The number of laminated layers is appropriately selected according to the size or weight of the acrylic rubber bale.

The size of the acrylic rubber bale of the present invention is not particularly limited, but the width of the bale is usually in the range of 100 to 800 mm, preferably 200 to 500 mm, more preferably 250 to 450 mm, the length of the same is usually in the range of 300 to 1,200 mm, preferably 400 to 1,000 mm, more preferably 500 to 800 mm, and the height thereof is usually in the range of 50 to 500 mm, preferably 100 to 300 mm, more preferably 150 to 250 mm.

The reactive group content, the water content, the ash content, the component content and ratio in the ash, the specific gravity, the gel content, the pH, the complex viscosity ([η] 60°C) at 60°C, the complex viscosity ([η] 100°C) at 100°C, the ratio ([η] 100°C /[η] 60°C) of the complex viscosity ([η] 100°C) at 100°C to the complex viscosity ([η] 60°C) at 60°C and Mooney viscosity (ML1+4,100°C) of the acrylic rubber bale of the present invention are the same as the characteristic values of the acrylic rubber sheet.

The method for producing an acrylic rubber bale is not particularly limited, but it can be easily produced by cooling the sheet-shaped dry rubber extruded from the above-mentioned screw-type extruder, cutting the dry rubber, and then laminating the dry rubber.

The lamination temperature of the sheet-shaped dry rubber is not particularly limited, but when it is usually 30°C or higher, preferably 35°C or higher, and more preferably 40°C or higher, it is preferable, since air entrapped during lamination can be released. The number of laminated layers may be appropriately selected according to the size or weight of the acrylic rubber bale. The acrylic rubber bale of the present invention is produced by the laminated sheet-shaped dry rubber being integrated by its own weight.

The acrylic rubber bale of the present invention thus obtained is excellent in operability and excellent in storage stability and water resistance as compared with crumb-shaped acrylic rubber, and the acrylic rubber bale can be used by putting into a mixer such as a Banbury mixer or a roll as it is or after being cut into a required amount.

<Rubber Mixture>

The rubber mixture of the present invention is characterized by that it is produced by mixing the acrylic rubber sheet or the acrylic rubber bale with a filler and a cross-linking agent.

The filler is not particularly limited, but examples thereof include a reinforcing filler and a non-reinforcing filler, and the reinforcing filler is preferable.

Examples of the reinforcing filler include: carbon black such as furnace black, acetylene black, thermal black, channel black and graphite; silica such as wet silica, dry silica and colloidal silica; and the like. Examples of non-reinforcing fillers include quartz powder, diatomaceous earth, zinc white, basic magnesium carbonate, activated calcium carbonate, magnesium silicate, aluminum silicate, titanium dioxide, talc, aluminum sulfate, calcium sulfate, barium sulfate, and the like.

These fillers can be used alone or in combination of two or more, and the compounding amount thereof, which is appropriately selected within a range that does not degrade the effects of the present invention, is usually in the range of 1 to 200 parts by weight, preferably 10 to 150 parts by weight, more preferably 20 to 100 parts by weight, with respect to 100 parts by weight of the acrylic rubber sheet or the acrylic rubber bale.

The cross-linking agent may be appropriately selected depending on the type and application of the reactive group contained in the acrylic rubber constituting the acrylic rubber sheet or the acrylic rubber bale, and it is not particularly limited as long as it can cross-link the acrylic rubber sheet or the acrylic rubber bale. Conventionally known cross-linking agents such as, for example, polyvalent amine compounds such as diamine compounds and carbonates thereof; sulfur compounds; sulfur donors; triazine thiol compounds; polyvalent epoxy compounds; organic carboxylic acid ammonium salts; organic peroxides; polyvalent carboxylic acids; a quaternary onium salt; an imidazole compound; an isocyanuric acid compound; an organic peroxide; a triazine compound; and the like can be used. Among these, polyvalent amine compounds, carboxylic acid ammonium salts, dithiocarbamic acid metal salts and triazine thiol compounds are preferable, and hexamethylenediamine carbamate, 2,2'-bis [4-(4-aminophenoxy) phenyl] propane, benzoin ammonium acid and 2,4,6-trimercapto-1,3,5-triazine are particularly preferable.

When the acrylic rubber sheet or the acrylic rubber bale to be used includes a carboxyl group-containing acrylic rubber, it is preferable to use a polyvalent amine compound and its carbonate as a cross-linking agent. Examples of the polyvalent amine compound include: aliphatic polyvalent amine compounds such as hexamethylenediamine, hexamethylenediamine carbamate and N,N'-dicinnamylidene-1,6-hexanediamine; aromatic polyvalent amine compound such as 4,4'-methylenedianiline, p-phenylenediamine, m-phenylenediamine, 4,4'-diaminodiphenyl ether, 3,4'-diaminodiphenyl ether, 4,4'-(m-phenylenediisopropylidene) dianiline, 4,4'-(p-phenylenediisopropylidene) dianiline, 2,2'-bis [4-(4-aminophenoxy) phenyl] propane, 4,4'-diaminobenzanilide, 4,4'-bis (4-aminophenoxy) biphenyl, m- xylylenediamine, p-xylylenediamine, 1,3,5-benzenetriamine, and the like; and the like. Among these, hexamethylenediamine carbamate, 2,2'-bis [4-(4-aminophenoxy) phenyl] propane, and the like are preferable.

When the acrylic rubber sheet or the acrylic rubber bale to be used is constituted by an epoxy group-containing acrylic rubber, examples of the cross-linking agent include: an aliphatic polyvalent amine compound such as hexamethylenediamine or hexamethylenediamine carbamate, and a carbonate thereof; aromatic polyvalent amine compound such as 4,4'-methylenedianiline; carboxylic acid ammonium salts such as ammonium benzoate and ammonium adipate; metal salts of dithiocarbamic acid such as zinc dimethyldithiocarbamate; polycarboxylic acids such as tetradecanedioic acid; quaternary onium salts such as cetyltrimethylammonium bromide; an imidazole compound such as 2-methylimidazole; isocyanuric acid compounds such as ammonium isocyanurate; and the like. Among these, carboxylic acid ammonium salts and metal salts of dithiocarbamic acid are preferable, and ammonium benzoate is more preferable.

When the acrylic rubber sheet or the acrylic rubber bale to be used is constituted by a halogen atom-containing acrylic rubber, it is preferable to use sulfur, a sulfur donor, or a triazine thiol compound as the cross-linking agent. Examples of the sulfur donor include dipentamethylene thiuram hexasulfide, triethyl thiuram disulfide and the like. Examples of the triazine compound include 6-trimercapto-s-triazine, 2-anilino-4,6-dithiol-s-triazine, 1-dibutylamino-3,5-dimercaptotriazine, 2-dibutylamino-4, 6-dithiol-s-triazine, 1-phenylamino-3,5-dimercaptotriazine, 2,4,6-trimercapto-1,3,5-triazine, 1-hexylamino-3,5-dimercaptotriazine, and the like. Among these, 2,4,6-trimercapto-1,3,5-triazine is preferable.

These cross-linking agents may be used alone or in combination of two or more, and the compounding amount thereof with respect to 100 parts by weight of the acrylic rubber sheet or the acrylic rubber bale is usually in the range of 0.001 to 20 parts by weight, preferably 0.1 to 10 parts by weight, more preferably 0.1 to 5 parts by weight. By setting the amount of the cross-linking agent to be in this range, it is possible to make the rubber elasticity sufficient while making the mechanical strength as the rubber cross-linked product excellent, which is preferable.

The rubber mixture of the present invention may contain other rubber components in addition to the above-mentioned acrylic rubber sheet or the acrylic rubber bale, if necessary.

The other rubber component used as necessary is not particularly limited, and examples thereof include natural rubber, polybutadiene rubber, polyisoprene rubber, styrene-butadiene rubber, acrylonitrile-butadiene rubber, silicone rubber, fluororubber, olefin elastomers, styrene elastomers, vinyl chloride elastomers, polyester elastomers, polyamide elastomers, polyurethane elastomers and polysiloxane elastomers. The shape of the other rubber component is not particularly limited, and may be, for example, a granular shape, a palet shape, a crumb shape, a sheet shape, or a bale shape.

These other rubber components may be used alone or in combination of two or more. The amount of these other rubber components to be used is appropriately selected within a range that does not degrade the effects of the present invention.

The rubber mixture of the present invention may contain an anti-aging agent, if necessary. The type of anti-aging agent is not particularly limited, but examples thereof include: phenolic anti-aging agents such as 2,6-di-t-butyl-4-methylphenol, 2,6-di-t-butylphenol, butylhydroxyanisole, 2,6-di-t-butyl-$\alpha$-dimethylamino-p-cresol, octadecyl-3-(3,5-di-t-butyl-4-hydroxyphenyl) propionate, styrenated phenol, 2,2'-methylene-bis (6-$\alpha$-methyl-benzyl-p-cresol), 4,4'-methylenebis (2,6-di-t-butylphenol), 2,2'-methylene-bis (4-methyl-6-t-butylphenol), 2,4-bis [(octylthio) methyl]-6-methylphenol, 2,2'-thiobis-(4-methyl-6-t-butylphenol), 4,4'-thiobis-(6-t-butyl-o-cresol), 2,6-di-t-butyl-4-(4,6-bis (octylthio)-1,3,5-triazin-2-ylamino) phenol; phosphite type anti-aging agents such as tris (nonylphenyl) phosphite, diphenylisodecylphosphite, tetraphenyldipropyleneglycol diphosphite; sulfur ester-based anti-aging agents such as dilauryl thiodipropionate; amine-based anti-aging agents such as phenyl-$\alpha$-naphthylamine, phenyl-P-naphthylamine, p-(p-toluenesulfonylamide)-diphenylamine, 4,4'-($\alpha$, $\alpha$-dimethylbenzyl) diphenylamine, N,N-diphenyl-p-phenylenediamine, N-isopropyl-N'-phenyl-p-phenylenediamine and butyraldehyde-aniline condensates; imidazole anti-aging agents such as 2-mercaptobenzimidazole; quinoline anti-aging agents such as 6-ethoxy-2,2,4-trimethyl-1,2-dihydroquinoline; hydroquinone anti-aging agents such as 2,5-di-(t-amyl) hydroquinone; and the like. Among these, amine-based anti-aging agents are particularly preferable. The anti-aging agent to be used here may be the same or a different kind of anti-aging agent used in the emulsion polymerization process.

These anti-aging agents can be used alone or in combination of two or more, and the compounding amount thereof with respect to 100 parts by weight of the acrylic rubber sheet or the acrylic rubber bale is in the range of 0.01 to 15 parts by weight, preferably 0.1 to 10 parts by weight, more preferably 1 to 5 parts by weight.

The rubber mixture of the present invention contains the above-mentioned acrylic rubber sheet or acrylic rubber bale of the present invention, a filler, a crosslinking agent, and, if necessary, the other rubber component and the anti-aging agent, and further optionally contain other additives, if necessary, commonly used in the art, for example, a cross-linking aid, a cross-linking accelerator, a cross-linking retarder, a silane coupling agent, a plasticizer, a processing aid, lubricants, pigments, colorants, antistatic agents, foaming agents and the like. These other compounding agents may be used alone or in combination of two or more, and the compounding amount thereof is appropriately selected within a range that does not degrade the effects of the present invention.

<Method for Producing Rubber Mixture>

Examples of the method for producing the rubber mixture of the present invention include a method of mixing the acrylic rubber sheet or the acrylic rubber bale of the present invention with a filler, a cross-linking agent, and the above-mentioned other rubber component which can be optionally contained, an anti-aging agent and other compounding agents. For mixing, any means conventionally used in the field of rubber processing, such as an open roll, a Banbury mixer, various kneaders, and the like can be used. This means that the acrylic rubber sheet or the acrylic rubber bale, the filler, the cross-linking agent and the like can be directly mixed, preferably directly kneaded, by using these mixers.

In that case, as the acrylic rubber sheet or the acrylic rubber bale, the obtained sheet or bale may be used as it is or may be divided (cut, or the like) when used.

The mixing procedure of each component is not particularly limited, but for example, a two-stage mixing is preferable, in which components that are difficult to react or decompose with heat are sufficiently mixed, and then thereafter, a cross-linking agent, which is a component that easily reacts or decomposes with heat, and the like are mixed for a short at a temperature that reaction and decomposition does not occur. To be specific, it is preferable to mix the acrylic rubber sheet or the acrylic rubber bale and the filler in the first stage and then mix the cross-linking agent in the second stage.

The other rubber components and the anti-aging agent are usually mixed in the first stage, the cross-linking accelerator is mixed in the second stage, and the other compounding agents may be appropriately selected.

The Mooney viscosity (ML1+4,100°C; compound Mooney) of the rubber mixture of the present invention thus obtained is not particularly limited, but is usually in the range of 10 to 150, preferably 20 to 100, more preferably 25 to 80.

<Rubber Cross-linked Product>

The rubber cross-linked product of the present invention is obtained by crosslinking the above rubber mixture.

The rubber cross-linked product of the present invention can be produced by molding the rubber mixture of the present invention by a molding machine applicable for a desired shape, for example, an extruder, an injection molding machine, a compressor and a roll, occurring a cross-linking reaction by heating, and fixing the shape as a rubber cross-linked product. In this case, the molding may be performed in advance and then cross-linked, or the molding and the cross-linking may be performed simultaneously. The molding temperature is usually 10 to 200°C, preferably 25 to 150°C. The cross-linking temperature is usually 100 to 250°C, preferably 130 to 220°C, more preferably 150 to 200°C. The cross-linking time is usually 0.1 minutes to 10 hours, preferably 1 minute to 5 hours. As a heating method, a known method has been used for cross-linking rubber such as press heating, steam heating, oven heating, and hot air heating may be appropriately selected.

The rubber cross-linked product of the present invention may be further heated for secondary cross-linking depending on the shape and size of the rubber cross-linked product. The secondary cross-linking varies depending on the heating method, the cross-linking temperature, the shape, and the like, but the secondary cross-linking is preferably performed for 1 to 48 hours. The heating method and heating temperature may be appropriately selected.

The rubber cross-linked product of the present invention is preferably used as: for example, sealing materials such as an O-ring, a packing, a diaphragm, an oil seal, a shaft seal, a bearing seal, a mechanical seal, a well head seal, an electric / electronic device seal, an air compression device; various kinds of gaskets such as a rocker cover gasket mounted on a connecting portion between a cylinder block and a cylinder head, an oil pan gasket mounted on a connecting portion between an oil pan and a cylinder head or a transmission case, a gasket for a fuel cell separator mounted between a pair of housings sandwiching a unit cell including a positive electrode, an electrolyte plate and a negative electrode, a gasket for hard disk drive top covers; cushioning materials, antivibration materials; electric wire coating materials; industrial belts; tubes and hoses; sheets; and the like.

The rubber cross-linked product of the present invention is also used as an extrusion-molded product and mold cross-linked product used for automobiles, for example, fuel oil system hoses for fuel tank such as a fuel hose, a filler neck hose, a vent hose, a vapor hose, an oil hose, and the like; air system hoses such as a turbo air hose, a mission control hose, and the like; various hoses such as a radiator hose, a heater hose, a brake hose, an air conditioner hose, and the like.

<Device Configuration used for Production of Acrylic Rubber Sheet>

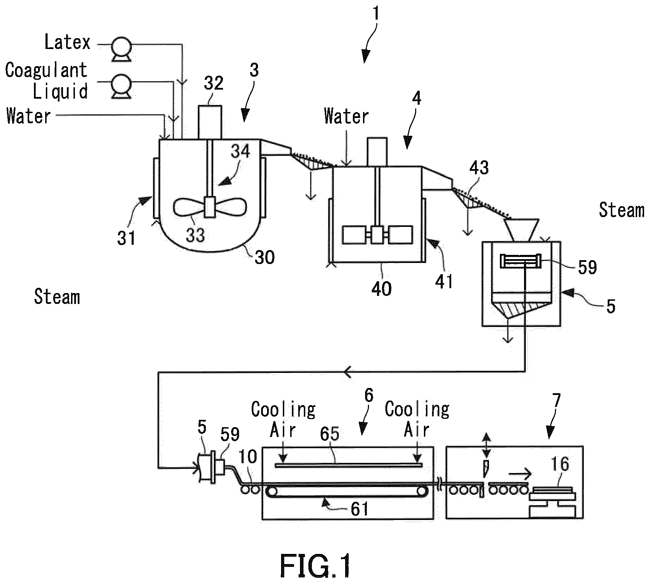

Next, a device configuration used for manufacturing the acrylic rubber sheet according to one embodiment of the present invention will be described. FIG. 1 is a diagram schematically showing an example of an acrylic rubber production system having a device configuration used for producing an acrylic rubber sheet according to one embodiment of the present invention. For producing the acrylic rubber sheet of the present invention, for example, the acrylic rubber production system 1 shown in FIG. 1 can be used.

The acrylic rubber production system shown in FIG. 1 is composed of an emulsion polymerization reactor (not shown), a coagulation device 3, a washing device 4, a drainer 43, a screw-type extruder 5, a cooling device 6, and a baling device 7.

The emulsion polymerization reactor is configured to perform the above-mentioned emulsion polymerization process. Although not shown in FIG. 1, this emulsion polymerization reactor has, for example, a polymerization reaction tank, a temperature control unit for controlling a reaction temperature, and a stirring device provided with a motor and a stirring blade. In the emulsion polymerization reactor, water and an emulsifier are mixed with a monomer component for forming an acrylic rubber, and the mixture is emulsified while being appropriately stirred by a stirrer, and emulsion polymerization is performed in the presence of a polymerization catalyst, thereby to obtain emulsion polymerization liquid. The addition of the phenolic anti-aging agent or the emulsion containing the phenolic anti-aging agent to the emulsion polymerization liquid can be carried out as it is in the emulsion polymerization reactor. The emulsion polymerization reactor may be a batch type, a semi-batch type or a continuous type, and may be a tank-type reactor or a tube-type reactor.

The coagulation device 3 shown in FIG. 1 is configured to perform the process related to the coagulation process described above. As schematically shown in FIG. 1, the coagulation device 3 includes, for example, a stirring tank 30, a heating unit 31 that heats the inside of the stirring tank 30, a temperature control unit (not shown) that controls the temperature inside the stirring tank 30, a stirring device 34 having a motor 32 and a stirring blade 33, and a drive control unit (not shown) that controls the rotation number and rotation speed of the stirring blade 33. In the coagulation device 3, hydrous crumbs can be produced by bringing the emulsion polymerization liquid obtained in the emulsion polymerization reactor into contact with the coagulant liquid to coagulate the emulsion polymerization liquid.

In the coagulation device 3, for example, the contact between the emulsion polymerization liquid and coagulant liquid is performed by adding the emulsion polymerization liquid to the stirred coagulant liquid. This means that the stirring tank 30 of the coagulation device 3 is filled with the coagulant liquid, and the emulsion polymerization liquid is added to and brought into contact with the coagulant liquid to coagulate the emulsion polymerization liquid, thereby generating hydrous crumbs.

The heating unit 31 of the coagulation device 3 is configured to heat the coagulant liquid with which the stirring tank 30 is filled. Further, the temperature control unit of the coagulation device 3 is configured to control the temperature inside the stirring tank 30 by controlling the heating operation by the heating unit 31 while monitoring the temperature inside the stirring tank 30 measured by a thermometer.

The coagulant liquid in the stirring tank 30 is controlled by the temperature control unit to be usually in the range of 40°C or higher, preferably 40 to 90°C, more preferably 50 to 80°C.

The stirring device 34 of the coagulation device 3 is configured to stir the coagulant liquid filled in the stirring tank 30. Specifically, the stirring device 34 includes a motor 32 that generates rotational power, and a stirring blade 33 that extends in a direction perpendicular to the rotation axis of the motor 32. The stirring blades 33 can rotate the coagulant liquid, which is coagulant solution, filled in the stirring tank 30 about the rotation axis by the rotational power of the motor 32 to flow the coagulant liquid. The shape and size of the stirring blade 33, the number of installations, and the like are not particularly limited.

The drive control unit of the coagulation device 3 is configured to control the rotational drive of the motor 32 of the stirring device 34 and set the rotation speed of the stirring blades 33 of the stirring device 34 to predetermined values. The stirring speed of the stirring blade 33 is controlled by the drive controller so that the stirring speed of the coagulant liquid is controlled to be, for example, usually in the range of 100 rpm or more, preferably 200 to 1,000 rpm, more preferably 300 to 900 rpm, and particularly preferably 400 to 800 rpm. The rotation of the stirring blade 33 is controlled by the drive controller so that the peripheral speed of the coagulant liquid is usually 0.5 m/s or higher, preferably 1 m/s or higher, more preferably 1.5 m/s or higher, particularly preferably 2 m/s or higher, most preferably 2.5 m/s or higher. Further, the rotation of the stirring blade 33 is controlled by the drive control unit so that the upper limit of the peripheral speed of the coagulant liquid is usually 50 m/s or lower, preferably 30 m/s or lower, more preferably 25 m/s or lower, and most preferably 20 m/s or lower.

The washing device 4 shown in FIG. 1 is configured to perform the above-described washing process. As schematically shown in FIG. 1, the washing device 4 includes, for example, a washing tank 40, a heating unit 41 that heats the inside of the washing tank 40, and a temperature control unit (not shown) that controls the temperature inside the washing tank 40. In the washing device 4, by mixing the hydrous crumbs produced in the coagulation device 3 with a large amount of water for washing, the ash content in the finally obtained acrylic rubber sheet can be effectively reduced.

The heating unit 41 of the washing device 4 is configured to heat the inside of the washing tank 40. In addition, the temperature control unit of the washing device 4 controls the temperature inside the washing tank 40 by controlling the heating operation by the heating unit 41 while monitoring the temperature inside the washing tank 40 measured by the thermometer. As described above, the temperature of the washing water in the washing tank 40 is controlled to be usually in the range of 40°C or higher, preferably 40 to 100°C, more preferably 50 to 90°C, and most preferably 60 to 80°C.

The hydrous crumb washed in the washing device 4 is supplied to the screw-type extruder 5 which performs a dehydration process and a drying process. At this time, it is preferable that the hydrous crumb after washing is supplied to the screw-type extruder 5 through a drainer 43 capable of separating free water. For the drainer 43, for example, a wire mesh, a screen, an electric sifter, or the like can be used.

Further, when the hydrous crumb after washing is supplied to the screw-type extruder 5, the temperature of the hydrous crumb is preferably 40°C or higher, more preferably 60°C or higher. By setting the temperature of water used for washing in the washing device 4, for example, to 60°C or higher (for example, 70°C), the temperature of the hydrous crumbs when supplied to the screw-type extruder 5 is maintained at 60°C or higher. Otherwise, the hydrous crumbs may be heated to a temperature of 40°C or higher, preferably 60°C or higher when being conveyed from the washing device 4 to the screw-type extruder 5. This makes it possible to effectively perform the dehydration process and the drying process, which are the subsequent processes, and to significantly reduce the water content of the finally obtained dried rubber.

The screw-type extruder 5 shown in FIG. 1 is configured to perform the processes related to the aforementioned dehydration process and the drying process. Although a screw-type extruder 5 is illustrated in FIG. 1 as a preferred example, a centrifuge, a squeezer, or the like may be used as a dehydrator that performs the process related to the dehydration process, and a hot air dryer, a reduced pressure dryer, an expander dryer, a kneader type dryer or the like may be used as a dryer that performs the process related to the drying process.

The screw-type extruder 5 is configured to mold the dried rubber obtained through the dehydration process and the drying process into a predetermined shape and to discharge the dried rubber. Specifically, the screw-type extruder 5 is provided with: a dehydration barrel section 53 having a function as a dehydrator to dehydrate the hydrous crumb washed by the washing device 4; a drying barrel section 54 having a function as a dryer for drying the hydrous crumb; and a die 59 having a forming function to form a hydrous crumb on the downstream side of the screw-type extruder 5.

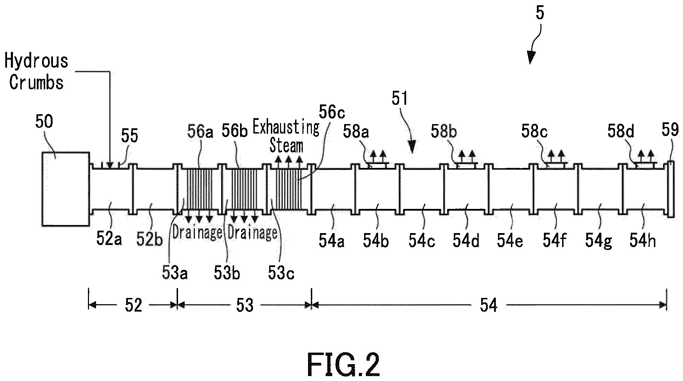

The configuration of the screw-type extruder 5 will be described below with reference to FIG. 2. FIG. 2 shows the configuration of a specific suitable example as the screw-type extruder 5 shown in FIG. 1. By the screw-type extruder 5, the above-described dehydration process and drying process can be suitably performed.

The screw-type extruder 5 shown in FIG. 2 is a twin-screw-type extruder / dryer including a pair of screws (not shown) in a barrel section 51. The screw-type extruder 5 has a drive unit 50 that rotationally drives a pair of screws in the barrel section 51. The drive unit 50 is attached to an upstream end (left end in FIG. 2) of the barrel section 51. Further, the screw-type extruder 5 has a die 59 at a downstream end (right end in FIG. 2) of the barrel section 51.

The barrel section 51 has a supply barrel section 52, a dehydration barrel section 53, and a drying barrel section 54 from the upstream side to the downstream side (from the left side to the right side in FIG. 2).

The supply barrel section 52 is composed of two supply barrels, which are a first supply barrel 52a and a second supply barrel 52b.

Further, the dehydration barrel section 53 is composed of three dehydration barrels, which are a first dehydration barrel 53a, a second dehydration barrel 53b and a third dehydration barrel 53c.

The drying barrel section 54 includes eight drying barrels, which are a first drying barrel 54a, a second drying barrel 54b, a third drying barrel 54c, a fourth drying barrel 54d, a fifth drying barrel 54e, a sixth drying barrel 54f, a seventh drying barrel 54g, and an eighth drying barrel 54h.

Thus, the barrel section 51 is configured by connecting the 13 divided barrels 52a to 52b, 53a to 53c, and 54a to 54h from the upstream side to the downstream side.

Further, the screw-type extruder 5 has a heating means (not shown) to individually heat each of the barrels 52a to 52b, 53a to 53c, and 54a to 54h. The hydrous crumbs in each of the barrels 52a to 52b, 53a to 53c, and 54a to 54h are heated to a predetermined temperature by the heating means. The heating means is provided with a number corresponding to each barrel 52a to 52b, 53a to 53c, 54a to 54h. As such a heating means, for example, a configuration in which high temperature steam is supplied from a steam supply means to a steam distribution jacket formed in each barrel 52a to 52b, 53a to 53c, 54a to 54h is adopted, but the configuration is not limited to this. Further, the screw-type extruder 5 has a temperature control means (not shown) to control the set temperature of each heating means corresponding to each barrel 52a to 52b, 53a to 53c, 54a to 54h.

It should be noted that the number of supply barrels, dehydration barrels, and drying barrels constituting the barrel sections 52, 53, and 54 of the barrel section 51 is not limited to the embodiment shown in FIG.2, but the number can be set in accordance with the water content of the hydrous crumbs of the acrylic rubber to be dried and the like.

For example, the number of supply barrels installed in the supply barrel section 52 is, for example, 1 to 3. Further, the number of dehydration barrels installed in the dehydration barrel section 53 is preferably, for example, 2 to 10, and more preferably 3 to 6, since the hydrous crumbs of the sticky acrylic rubber can be efficiently dehydrated. Further, the number of the drying barrels installed in the drying barrel section 54 is, for example, preferably 2 to 10, and more preferably 3 to 8.

The pair of screws in the barrel section 51 are rotationally driven by a driving means such as a motor stored in the driving unit 50. The pair of screws, extending from the upstream side to the downstream side in the barrel section 51, is rotationally driven so that the pair of screws can convey the hydrous crumbs to the downstream side while mixing the hydrous crumbs supplied to the supply barrel section 52. The pair of screws is preferably a biaxial meshing type in which peaks and troughs are meshed with each other, whereby the dehydration efficiency and drying efficiency of the hydrous crumbs can be increased.

Further, the rotation direction of the pair of screws may be the same direction or different directions, but from the viewpoint of self-cleaning performance, a type that rotates in the same direction is preferable. The screw shape of the pair of screws is not particularly limited and may be any shape required for each barrel section 52, 53, 54.

The supply barrel section 52 is an area for supplying the hydrous crumbs into the barrel section 51. The first supply barrel 52a of the supply barrel section 52 has a feed port 55 provided therewith for supplying the hydrous crumbs into the barrel section 51.

The dehydration barrel section 53 is an area for separating and discharging a liquid (serum water) containing a coagulant from hydrous crumbs.

The first to third dehydration barrels 53a to 53c, constituting the dehydration barrel section 53, have dehydration slits 56a, 56b and 56c for discharging the moisture of the hydrous crumbs to the outside, respectively. A plurality of dehydrating slits 56a, 56b, 56c are formed in each of the dehydration barrels 53a to 53c.

The slit width of each dehydration slit 56a, 56b, 56c, that is, the opening may be appropriately selected according to the use conditions, and is usually 0.01 to 5 mm. It is preferably 0.1 to 1 mm, and more preferably 0.2 to 0.6 mm, from the viewpoint that the loss of the hydrous crumb is small and the dehydration of hydrous crumb can be efficiently performed.

There are two cases to remove water from the hydrous crumbs in the dehydration barrels 53a to 53c of the dehydration barrel section 53, which are a case to remove water in a liquid form from each of the dehydration slits 56a, 56b and 56c and to a case to remove water in a vapor state. In the dehydration barrel section 53 of the present embodiment, for distinction of the two cases, the case of removing water in a liquid state is defined as drainage, and the case of removing in a vapor state is defined as steam exhausting.

In the dehydration barrel section 53, it is preferable to use drainage and steam exhausting in combination, since it is possible to efficiently reduce the water content of the sticky acrylic rubber. In the dehydration barrel section 53, which of the first to third dehydration barrels 53a to 53c is to be used for drainage or discharging steam may be appropriately set according to the purpose of use, but it is preferable to increase the number of dehydration barrels for drainage in a case of reducing ash content in usually produced acrylic rubber. In that case, for example, as shown in FIG. 2, the first and second dehydration barrels 53a and 53b on the upstream side perform drainage, and the third dehydration barrel 53c on the downstream side performs steam exhausting. Further, it may be considered that, for example, when the dehydration barrel section 53 has four dehydration barrels, a mode in which, for example, three upstream dehydration barrels perform drainage and one downstream dehydration barrel performs steam exhausting. On the other hand, in the case of reducing the water content, it is advantageous to increase the number of dehydration barrels for steam exhausting.

The set temperature of the dehydration barrel section 53 is usually in the range of 60 to 150°C, preferably 70 to 140°C, and more preferably 80 to 130°C, as described in the dehydration / drying process above. The set temperature of the dehydration barrel for dehydration in a drained state is usually in the range of 60 to 120°C, preferably 70 to 110°C, more preferably 80 to 100°C, and the set temperature of the dehydration barrel for dehydration in the steam exhausting state is usually in the range of 100 to 150°C, preferably 105 to 140°C, more preferably 110 to 130°C.

The drying barrel section 54 is an area for drying the hydrous crumbs after dehydration under reduced pressure. Out of the first to eighth drying barrels 54a to 54h forming the drying barrel section 54, the second drying barrel 54b, the fourth drying barrel 54d, the sixth drying barrel 54f, and the eighth drying barrel 54h are provided with vent ports 58a, 58b, 58c, 58d for deaeration, respectively. A vent pipe (not shown) is connected to each of the vent ports 58a, 58b, 58c, 58d.

A vacuum pump (not shown) is connected to the end of each vent pipe, and the inside of the drying barrel 54 is depressurized to a predetermined pressure by the operation of these vacuum pumps. The screw-type extruder 5 has pressure control means (not shown) for controlling the operation of the vacuum pumps and controlling the degree of pressure reduction in the drying barrel section 54.

The degree of pressure reduction in the drying barrel section 54 may be appropriately selected, but as described above, it is usually set to 1 to 50 kPa, preferably 2 to 30 kPa, and more preferably 3 to 20 kPa.

The set temperature in the drying barrel section 54 may be appropriately selected, but as described above, it is usually set to 100 to 250°C, preferably 110 to 200°C, and more preferably 120 to 180°C.

In each of the drying barrels 54a to 54h forming the drying barrel section 54, the temperature thereof may be set to an approximate value of all the drying barrels 54a to 54h or different values, but it is preferable to set the temperature of the downstream side (the side of the die 59) higher than the temperature of the upstream side (the side of the dehydration barrel section 53), since the drying efficiency is improved.

The die 59 is a mold arranged at the downstream end of the barrel section 51 and has a discharge port having a predetermined nozzle shape. The acrylic rubber dried in the drying barrel 54 passes through the discharge port of the die 59 to be extruded into a shape corresponding to the predetermined nozzle shape. In the present invention, by making the nozzle shape of the die 59 a substantially rectangular shape, the acrylic rubber passing through the die 59 can be extruded and molded in a sheet shape. A breaker plate or a wire net may or may not be provided between the screw and the die 59.

According to the screw-type extruder 5 according to the present embodiment, the hydrous crumbs of the raw material acrylic rubber are extruded into a sheet-shaped dry rubber in a following way.

The hydrous crumbs of acrylic rubber obtained through the washing process is supplied to the supply barrel section 52 from the feed port 55. The hydrous crumb supplied to the supply barrel section 52 is sent from the supply barrel section 52 to the dehydration barrel section 53 by rotation of a pair of screws in the barrel section 51. In the dehydration barrel section 53, as described above, the water contained in the hydrous crumbs is drained or the steam is discharged from the dehydration slits 56a, 56b, and 56c provided in the first to third dehydration barrels 53a to 53c, respectively, so that the hydrous crumbs are dehydrated.

The hydrous crumbs dehydrated in the dehydration barrel section 53 is sent to the drying barrel section 54 by rotation of a pair of screws in the barrel section 51.

The hydrous crumbs sent to the drying barrel section 54 are plasticized and mixed to form a melt, which is conveyed to the downstream side while being heated. Then, the water contained in the melt of the acrylic rubber is vaporized, and the water (vapor) is discharged to the outside through vent pipes (not shown) connected to the vent ports 58a, 58b, 58c, 58d.

During passing through the drying barrel section 54 as described above, the hydrous crumbs are dried to become a melt of acrylic rubber, so that the acrylic rubber is supplied to the die 59 by the rotation of a pair of screws in the barrel section 51, to be formed into a sheet shape, is extruded from the die 59 as a dried rubber.

Hereinafter, an example of operating conditions of the screw extruder 5 according to the present embodiment will be described.

The rotation speed (N) of the pair of screws in the barrel section 51 may be appropriately selected according to various conditions, and is usually 10 to 1,000 rpm, and since the water content and the gel amount of the acrylic rubber sheet can be efficiently reduced, the rotation speed (N) of the pair of screws in the barrel section 51 is preferably 50 to 750 rpm, more preferably 100 to 500 rpm, and most preferably 120 to 300 rpm.

The extrusion rate (Q) of the acrylic rubber is not particularly limited, but it is usually 100 to 1,500 kg/hr, preferably 300 to 1,200 kg/hr, more preferably 400 to 1,000 kg/hr, and most preferably 500 to 800 kg/hr.

The ratio (Q / N) of the extrusion amount (Q) of the acrylic rubber to the rotation speed (N) of the screw is not particularly limited, but it is usually 1 to 20, preferably 2 to 10, and more preferably 3 to 8, and particularly preferably 4 to 6.

The cooling device 6 shown in FIG. 1 is configured to cool the dried rubber obtained through the dehydration process using a dehydrator and the drying process using a dryer. As a cooling method by the cooling device 6, various methods including an air cooling method in which air is blown or under cooling, a water spraying method in which water is sprayed, a dipping method in which water is immersed, and the like can be adopted. Otherwise, the dried rubber may be cooled by leaving it at room temperature.

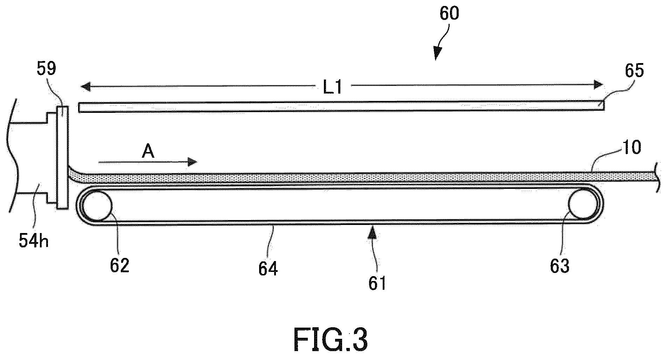

Hereinafter, as an example of the cooling device 6, a transport-type cooling device 60 that cools the sheet-shaped dried rubber 10 will be described with reference to FIG. 3.

FIG. 3 shows a configuration of a conveyor-type cooling device 60 suitable as the cooling device 6 shown in FIG. 1. The conveyor-type cooling device 60 shown in FIG. 3 is configured to cool the sheet-shaped dry rubber 10 discharged from the discharge port of the die 59 of the screw-type extruder 5 by an air cooling method while conveying the sheet-type dry rubber 10. By using this conveyor-type cooling device 60, the sheet-shaped dry rubber 10 discharged from the screw-type extruder 5 can be suitably cooled.

The conveyor-type cooling device 60 shown in FIG. 3 is used, for example, directly connected to the die 59 of the screw-type extruder 5 shown in FIG. 2 or installed close to the die 59.

The conveyor-type cooling device 60 is provided with a conveyor 61 that conveys the sheet-shaped dry rubber 10 discharged from the die 59 of the screw-type extruder 5 in the direction of arrow A in FIG. 3, and a cooling means 65 for blowing cool air to the sheet-shaped dry rubber 10 on the conveyor 61.

The conveyor 61 has rollers 62 and 63, and a conveyor belt 64 that is wound around these rollers 62 and 63 and on which the sheet-shaped dry rubber 10 is placed. The conveyor 61 is configured to continuously convey the sheet-shaped dry rubber 10 discharged from the die 59 of the screw-type extruder 5 onto the conveyor belt 64 to the downstream side (right side in FIG. 3).

The cooling means 65 is not particularly limited, but examples thereof include a cooling means that has a structure capable of blowing cooling air sent from a cooling air generation means (not shown) onto the surface of the sheet-shaped dry rubber 10 on the conveyor belt 64.

The length L1 of the conveyor 61 and the cooling means 65 (the length of the portion to which the cooling air can be blown) of the transport cooling device 60 is not particularly limited, but is, for example, 10 to 100 m, preferably 20 to 50 m. Further, the conveyance speed of the sheet-shaped dry rubber 10 in the conveyor-type cooling device 60, which can be appropriately adjusted in accordance with the length L1 of the conveyor 61 and the cooling means 65, the discharge speed of the sheet-shaped dry rubber 10 discharged from the die 59 of the screw-type extruder 5, a target cooling speed, a target cooling time, and the like, is, for example, 10 to 100 m/hr, and more preferably 15 to 70 m/hr.

According to the conveyor-type cooling device 60 shown in FIG. 3, the sheet-shaped dry rubber 10 discharged from the die 59 of the screw-type extruder 5 is conveyed by the conveyor 61 while the sheet-shaped dry rubber 10 is cooled by the cooling means 65 by blowing the cooling air to the sheet-shaped dry rubber 10.

It should be noted that the conveyor-type cooling device 60 is not particularly limited to the configuration including one conveyor 61 and one cooling means 65 as shown in FIG. 3, but it may be configured to be provided with two or more conveyors 61 and two or more cooling means 65 corresponding thereto. In that case, the total length of each of the two or more conveyors 61 and the cooling means 65 may be set within the above range.

The bale forming device 7 shown in FIG. 1 is configured to process a dried rubber extruded from a screw-type extruder 5 and cooled by a cooling device 6 to produce a bale, which is shaped in a chunk of a block. The weight and shape of the acrylic rubber bale produced by the baling device 7 are not particularly limited, but, for example, a substantially rectangular parallelepiped acrylic rubber bale weighing about 20 kg is produced.

Further, the acrylic rubber bale may be produced by laminating the sheet-shaped dry rubber 10 produced by the screw-type extruder 5. For example, a cutting mechanism for cutting the sheet-shaped dry rubber 10 may be provided in the baling device 7 provided on the downstream side of the conveyor-type cooling device 60 shown in FIG. 3. Specifically, for example, the cutting mechanism of the baling device 7 is configured to continuously cuts the cooled sheet-shaped dry rubber 10 at predetermined intervals and processes it into a cut sheet-shaped dry rubber 16 having a predetermined size. By laminating a plurality of cut sheet-shaped dry rubbers 16 cut into a predetermined size by the cutting mechanism, an acrylic rubber bale in which the cut sheet-shaped dry rubbers 16 are laminated can be produced.

When producing an acrylic rubber bale in which the cut sheet dry rubbers 16 are laminated, it is preferable to laminate the cut sheet dry rubbers 16 at 40°C or higher, for example. By laminating the cut sheet dry rubbers 16 at 40°C or higher, good air release is realized by further cooling and compression by its own weight.

[EXAMPLES]

The present invention will be described more specifically below with reference to Examples, and Comparative Examples. In addition, "part", "%" and "ratio" in each example are based on weight unless otherwise specified.

Various chemical or physical properties were evaluated according to the following methods.

[Monomer Composition]

Regarding the monomer composition in the acrylic rubber, the monomer composition of each monomer unit in the acrylic rubber was confirmed by H-NMR, and existence of the activity of the reactive group remained in the acrylic rubber and the content of the reactive group were confirmed by the following test method.

Further, the content ratio of each monomer unit in the acrylic rubber was calculated from the amount of each monomer used in the polymerization reaction and the polymerization conversion rate. Specifically, the content ratio of each monomer unit was regarded as the same as the amount of each monomer used, since the polymerization reaction was an emulsion polymerization reaction, and the polymerization conversion rate was about 100% in which no unreacted monomer could be confirmed.

[Reactive Group Content]

The content of the reactive group of the acrylic rubber was measured by measuring the content in the acrylic rubber sheet or the acrylic rubber bale by the following method:

(1) The amount of carboxyl group was calculated by dissolving the acrylic rubber sheet or the acrylic rubber bale in acetone and performing potentiometric titration with a potassium hydroxide solution.
(2) The amount of epoxy group was calculated by dissolving the acrylic rubber sheet or the acrylic rubber bale in methyl ethyl ketone, adding a specified amount of hydrochloric acid thereto to react with epoxy groups, and titrating the amount of residual hydrochloric acid with potassium hydroxide.
(3) The amount of chlorine was calculated by completely burning the acrylic rubber sheet or the acrylic rubber bale in a combustion flask, absorbing the generated chlorine in water, and titrating with silver nitrate.

[Anti-Aging Agent Content]

The anti-aging agent content (%) in the acrylic rubber sheet or the acrylic rubber bale was determined by dissolving the acrylic rubber sheet or the acrylic rubber bale in tetrahydrofuran and performing gel permeation chromatography (GPC) measurement, and calculating based on a calibration curve of the same anti-aging agent.

[Ash Content]

The ash content (%) contained in the acrylic rubber sheet or the acrylic rubber bale was measured according to JIS K6228 A method.

[Ash Component Content]

The amount of each component (ppm) in the ash of the acrylic rubber sheet or the acrylic rubber bale was measured by XRF using a ZSX Primus (manufactured by Rigaku Corporation) by pressing the ash collected during the above-mentioned ash content measurement onto a titration filter paper having a diameter of 20 mm.

[Gel Amount]

The gel amount (%) of the acrylic rubber sheet or the acrylic rubber bale is the amount of gel insoluble in methyl ethyl ketone, and was determined by the following method:

About 0.2 g of the acrylic rubber sheet or the acrylic rubber bale was weighed (X g), immersed in 100 ml of methyl ethyl ketone, left at room temperature for 24 hours, and then a filtrate obtained by filtering out the gel insoluble in methyl ethyl ketone using an 80 mesh wire net, that is, a filtrate in which only the rubber component soluble in methyl ethyl ketone was dissolved. The dry solid content (Y g) obtained by evaporating and drying and coagulating the filtrate was weighed and calculated by the following formula.

$$\text{Gel amount (\%)} = 100 \times (X\text{-}Y) / X$$

[Specific Gravity]

The specific gravity of the acrylic rubber sheet or the acrylic rubber bale was measured according to JIS K6268 cross-linked rubber-method A of density measurement.

[Glass Transition Temperature (Tg)]

The glass transition temperature (Tg) of the acrylic rubber constituting the acrylic rubber bale was measured using a differential scanning calorimeter (DSC, product name "X-DSC7000", manufactured by Hitachi High-Tech Science Corporation).

[pH]

The pH of the acrylic rubber sheet or the acrylic rubber bale was measured with a pH electrode after dissolving 6 g ($\pm$ 0.05 g) of the acrylic rubber sheet or the acrylic rubber in 100 g of tetrahydrofuran and thereafter adding 2.0 ml of distilled water to confirm that the acrylic rubber was completely dissolved.

[Water Content]

The water content (%) of the acrylic rubber sheet or the acrylic rubber bale was measured according to JIS K6238-1: Oven A (volatile content measurement) method.

[Molecular Weight and Molecular Weight Distribution]

The weight average molecular weight (Mw) and the molecular weight distribution (Mz / Mw) of the acrylic rubber are an absolute molecular weight and an absolute molecular weight distribution, respectively, measured by the GPC-MALS method in which a solution in which 0.05 mol / L of lithium chloride and 0.01% of 37% concentrated hydrochloric acid are added to dimethylformamide is used as a solvent. To be specific, a multi-angle laser light scattering photometer (MALS) and a refractive index detector (RI) were incorporated into a GPC (Gel Permeation Chromatography) device, and the light scattering intensity and the difference in the refractive index of the molecular chain solution size-separated were measured by the GPC device by following the elution time, so that the molecular weight of the solute and its content rate were sequentially calculated and determined. Measurement conditions and measurement methods of the GPC device are as follows:

Column: TSKgel $\alpha$-M 2 pieces ($\varphi$7.8 mm$\times$30 cm, manufactured by Tosoh Corporation) Column Temperature: 40°C
Flow Rate: 0.8 ml/mm
Sample Preparation: 5 ml of the solvent was added to 10 mg of the sample, and the mixture was gently stirred at room temperature (dissolution was visually confirmed). Thereafter, filtration was performed using a 0.5 $\mu$m filter.

[Complex Viscosity]

The complex viscosity $\eta$ at each temperature of the acrylic rubber sheet or the acrylic rubber bale was determined by measuring the temperature dispersion (40 to 120°C) at a strain of 473% and 1 Hz using a dynamic viscoelasticity measuring device "Rubber Process Analyzer RPA-2000" (manufactured by Alpha Technology Co., Ltd.). Here, of the above-mentioned dynamic viscoelasticities, the dynamic viscoelasticity at 60°C is defined as the complex viscosity $\eta$ (60°C), and the dynamic viscoelasticity at 100°C is defined as the complex viscosity $\eta$ (100°C), and the values $\eta$ (100°C) / $\eta$ (60°C) and $\eta$ (60°C) / $\eta$ (100°C) were calculated.

[Storage stability Evaluation]

Regarding the storage stability of the rubber sample, the rubber mixture of the rubber sample was put into a constant temperature and humidity chamber of 45°C $\times$ 80% RH for 7 days, and the rubber sample before and after the test was used as a rubber mixture and a cross-linking test was performed at 180°C for 10 minutes using a rubber vulcanization tester (a moving die rheometer MDR; manufactured by Alpha Technology Co., Ltd., and the change rate of cross-link density, which is the difference (MH-ML) between the maximum torque (MH) and the minimum torque (ML), was calculated and compared. Evaluation was carried out by an index with Comparative Example 1 being 100 (the smaller the index, the better the storage stability).

[Processability Evaluation]

The processability of the rubber sample was measured by adding the rubber sample to a Banbury mixer heated to 50°C, kneading for 1 minute, and then adding the compounding agent A having the composition of the rubber mixture shown in Table 2 to obtain the first-stage rubber mixture. The time until the first-stage rubber mixture was integrated to show the maximum torque value, that is, BIT (Black Incorporation Time) was measured and evaluated by an index with Comparative Example 1 being 100 (the smaller the index, the better the processability).

[Normal Physical Property Evaluation]

The normal physical properties of the rubber cross-linked product of the rubber sample were evaluated according to JIS K6251 by measuring the breaking strength, 100% tensile stress and breaking elongation, and were evaluated based on the following criteria:

(1) The breaking strength was evaluated as ⊚, good, for 10 MPa or more and as ×, unacceptable, for less than 10 MPa.
(2) For 100% tensile stress, 5 MPa or more was evaluated as ⊚ and less than 5 MPa was evaluated as ×.
(3) The breaking elongation was evaluated as ⊚ for 150% or more and as × for less than 150%.

[Arrangement of the Emulsion Containing Anti-aging Agent]

An emulsion containing anti-aging agent to be add into the emulsion polymerization liquid after the emulsion polymerization was completed, based on the condition described in table 1, by supplying water of appointed temperature and quantity into an arrangement tank with the stirring blade, by adding an emulsifier of the predetermined quantity to the water under agitation to form the emulsifier liquid and subsequently by adding of 1 part of anti-aging agent and by stirring the liquid for two hours. Thereafter, pH of the liquid was measured after addition of an anti-aging agent in the said emulsified liquid. If there was not within the range of pH 3 to 6, sulfuric acid or sodium hydroxide is added so as to enter within the said range, and the gross quantity of the anti-aging agent-containing emulsion thus prepared was added in an emulsion polymerization liquid after the polymerization.
1 : IRG1076 in the table represents 3-(3,5-di-tert-butyl-4-hydroxyphenyl) stearyl propionate (made by BASF SE),

[Table 1]※1 :IRG1076 in the table represents 3-(3,5-di-tert-butyl-4-hydroxyphenyl) stearyl propionate (made by BASF SE), Nocrac CD represents 4.4'-bis ($\alpha$, $\alpha$-dimethylbenzyl) diphenylamine (made by OUCHI SHINKO CHEMICAL INDUSTRIAL CO., LTD.). ※2: Emulsifier 1 in the table represents sodium octyloxydioxyetylene phosphate, a phosphoric acid emulsifier. Emulsifier 2 represents sodium nonylphenyloxyhexaoxyethylene phosphate, a phosphoric acid emulsifier. Emulsifier 3 represents sodium tridecyloxyhexaoxyethylene phosphate, a phosphoric acid emulsifier. Emulsifier 4 represents sodium lauryl sulfate, a sulfuric acid emulsifier.

| | | Anti-aging Emulsion 1 | Anti-aging Emulsion 2 | Anti-aging Emulsion 3 | Anti-aging Emulsion 4 | Anti-aging Emulsion 5 | Anti-aging Emulsion 6 | Anti-aging Emulsion 7 |
|---|---|---|---|---|---|---|---|---|
| Preparing Conditions for Emulsion Containing Anti-Aging Agent | | | | | | | | |
| | Type of anti-aging agent ※1 | IRG1076 | IRG1076 | IRG1076 | IRG1076 | IRG1076 | IRG1076 | Nocrac CD |
| | Molecular weight of anti-aging agent | 561 | 561 | 561 | 561 | 561 | 561 | 406 |
| | Melting point of anti-aging agent (°C) | 52 | 52 | 52 | 52 | 52 | 52 | 95 |
| | Anti-aging agent content (parts) | 1 | 1 | 1 | 1 | 1 | 1 | 1 |
| | Type of emulsifier ※2 | Emulsifier 1 | Emulsifier 2 | Emulsifier 3 | Emulsifier 3 | Emulsifier 3 | Emulsifier 4 | Emulsifier 4 |
| | Emulsifier content (parts) | 0.18 | 0.18 | 0.18 | 0.18 | 0.002 | 0.002 | 0.002 |
| | Water temperature (°C) | 70 | 70 | 70 | 25 | 25 | 25 | 25 |
| | Water content (parts) | 1.44 | 1.44 | 1.44 | 1.44 | 1 | 1 | 1 |
| Property Values of Emulsion Containing Anti-Aging Agent | | | | | | | | |
| | Anti-aging agent concentration (%) | 41 | 41 | 41 | 41 | 50 | 50 | 50 |
| | Emulsifier concentration (%) | 6.9 | 6.9 | 6.9 | 6.9 | 0.1 | 0.1 | 0.1 |
| | pH | 5.2 | 5.4 | 5.1 | 5.1 | 5.1 | 5.6 | 5.8 |

Nocrac CD represents 4.4'-bis ($\alpha$, $\alpha$-dimethylbenzyl) diphenylamine (made by OUCHI SHINKO CHEMICAL INDUSTRIAL CO., LTD.). ※2: Emulsifier 1 in the table represents sodium octyloxydioxyetylene phosphate, a phosphoric acid emulsifier. Emulsifier 2 represents sodium nonylphenyloxyhexaoxyethylene phosphate, a phosphoric acid emulsifier.

EP 4 001 323 A1

Emulsifier 3 represents sodium tridecyloxyhexaoxyethylene phosphate, a phosphoric acid emulsifier. Emulsifier 4 represents sodium lauryl sulfate, a sulfuric acid emulsifier.

[Example 1]

46 parts of pure water, 74.5 parts of ethyl acrylate, 17 parts of n-butyl acrylate, 7 parts of methoxyethyl acrylate, and 1.5 parts of mono-n-butyl fumarate, and 1.8 parts of octyloxydioxyethylene phosphate sodium salt as an emulsifier were mixed in a mixing container provided with a homomixer, and stirred, thereby to obtain a monomer emulsion.

Subsequently, 170 parts of pure water and 3 parts of the monomer emulsion obtained as mentioned above were put into a polymerization reaction tank provided with a thermometer and a stirrer, and cooled to 12°C under a nitrogen stream. Subsequently, the rest of the monomer emulsion, 0.00033 part of ferrous sulfate, 0.264 part of sodium ascorbate, and 0.22 part of potassium persulfate were continuously dropped into the polymerization reaction tank over 3 hours. Thereafter, the reaction was continued while maintaining the temperature in the polymerization reaction tank at 23°C, and upon the confirmation that the polymerization conversion rate reached about 100%, hydroquinone as a polymerization terminator was added to terminate the polymerization reaction. The anti-aging emulsion 1 of the anti-aging agent (IRG1076) shown in Table 1 which previously prepared as an emulsion containing anti-aging agent, was added to the polymerization emulsion, thereby to obtain the emulsion containing the anti-aging agent.

In the coagulation tank provided with a thermometer and a stirring device, 2% magnesium sulfate aqueous solution (coagulant liquid) was heated to 80°C and vigorously stirred (rotation speed of 600 rpm, peripheral speed of 3.1 m/s). The emulsion polymerization liquid added with the anti-aging agent as described above and heated to 80°C was continuously added to the magnesium sulfate aqueous solution, so that the polymer was coagulated, and filtered to obtain the hydrous crumbs.

In next step, 194 parts of hot water (70°C) was added to the coagulation tank and stirred for 15 minutes, and then water was discharged, and again 194 parts of hot water (70°C) was added and stirred for 15 minutes to wash the hydrous crumbs. The washed hydrous crumbs (hydrous crumbs temperature 65°C) were supplied to a screw-type extruder 15, dehydrated, dried, and then extruded as sheet-shaped dry rubber having a width of 300 mm and a thickness of 10 mm. Then, the sheet-shaped dry rubber was cooled at a cooling rate of 200°C/hr by using a conveyance-type cooling device directly connected to the screw-type extruder.

The screw-type extruder used in Example 1 is constituted by one supply barrel, three dehydration barrels (first to third dehydration barrels), and five drying barrels (first to fifth drying barrels). The first and second dehydration barrels drain water, and the third dehydrating barrel exhausts steam. The operating conditions of the screw-type extruder were as follows.

Water Content:

- Water content of hydrous crumbs after drainage in the second dehydration barrel: 20%
- Water content of hydrous crumbs after steam exhausting in the third dehydration barrel: 10%
- Water content of hydrous crumbs after drying in the fifth drying barrel: 0.4%

Rubber Temperature:

- Temperature of hydrous crumbs supplied to the first supply barrel: 65°C
- Temperature of rubber discharged from the screw-type extruder: 140°C

Set Temperature of Each of Barrels:

- First dehydration barrel: 90°C
- Second dehydration barrel: 100°C
- Third dehydration barrel: 120°C
- First drying barrel: 120°C
- Second drying barrel: 130°C
- Third drying barrel: 140°C
- Fourth drying barrel: 160°C
- Fifth drying barrel: 180°C

Operating Conditions:

- Diameter of the screw in the barrel section (D): 132mm
- Total length (L) of the screw in the barrel section: 4620 mm
- L/D: 35

- Rotation speed of the screw in the barrel section: 135 rpm
- Extrusion rate of the rubber from the die: 700 kg/hr
- Die resin pressure: 2 MPa

The extruded sheet-shaped dry rubber was cooled to 50°C, cut by a cutter to obtain an acrylic rubber sheet (A). Reactive group content, ash content, ash component content, specific gravity, gel amount, glass transition temperature (Tg), pH, anti-aging agent content, water content, molecular weight, molecular weight distribution, and complex viscosity of the obtained acrylic rubber sheet (A) were measured and their results are shown in Tables 3-1, 3-2.

Further, the obtained acrylic rubber sheet (A) was laminated to be 20 parts (20 kg) before it becomes 40°C or lower to obtain the acrylic rubber bale (A). Reactive group content, ash content, ash component content, specific gravity, gel amount, glass transition temperature (Tg), pH, anti-aging agent content, water content, molecular weight, molecular weight distribution, and complex viscosity of the obtained acrylic rubber bale (A) were measured.

Next, using a Banbury mixer, 100 parts of the acrylic rubber bale (A) and the Compounding Agent A of "Composition 1" shown in Table 2 were added and mixed at 50°C for 5 minutes. Here, processability evaluation was carried out and the result was shown in Table 3-2. Then, the obtained mixture was transferred to a roll at 50°C, and the Compounding Agent B of "Composition 1" shown in Table 2 was compounded and mixed to obtain a rubber mixture. Cross-link test of the obtained rubber mixture was carried out and the result was shown in Table 3-2. It should be noted that the cross-link (vulcanization) condition was 10 minutes at 180°C for the primary vulcanization and 2 hours at 180°C for the secondary vulcanization.

[Table 2]

| Composition (Parts) | | Composition 1 | Composition 2 | Composition 3 | Composition 4 |
|---|---|---|---|---|---|
| Compounding Agent A | Polymer / Sheet | 100 | 100 | 100 | 100 |
| | SEAST3(HAF) ※1 | 60 | 60 | 60 | 60 |
| | Stearic Acid | 1 | 1 | 1 | 1 |
| | Ester Wax | 1 | 1 | 1 | 1 |
| | Nocrac CD ※2 | 2 | 2 | 2 | 2 |
| Compounding Agent B | Hexamethylenediamine carbamate | 0.5 | 0.6 | - | - |
| | Rhenogran®XLA-60 ※3 (Synthetic mixture of active amine and retarder) | 2 | 2 | - | - |
| | Ammonium benzoate | - | - | 1.5 | - |
| | NS soap (Semi-hardened beef tallow fatty acid soda soap) | - | - | - | 3 |
| | NONSOUL SN-1 (Main component of stearic acid) | - | - | - | 0.5 |
| | SULFAX®PMC (Sulfur content : 97.5%) | - | - | - | 0.3 |
| ※1: SEAST3 (HAF) in the table is a carbon black (made by Tokai Carbon Co., Ltd.). ※2: Nocrac CD in the table is 4,4'-bis ($\alpha$, $\alpha$-dimethyl benzyl) diphenylamine : made by OUCHI SHINKO CHEMICAL INDUSTRIAL CO.,LTD.). ※3: Rhenogran® XLA-60 in the table is a vulcanization accelerator (made by LANXESS CO.,LTD.). | | | | | |

The acrylic rubber sheet was laminated to be 20 parts (20 kg) before it becomes 40°C or lower to obtain the acrylic rubber bale (A). Reactive group content, ash content, ash component content, specific gravity, gel amount, glass transition temperature (Tg), pH, anti-aging agent content, water content, molecular weight, molecular weight distribution, complex viscosity and Mooney viscosity of the obtained acrylic rubber bale (A) were measured.

[Example 2]

An acrylic rubber sheet (B) and an acrylic rubber bale (B) were obtained in the same manner as in Example 1 except that the monomer component was changed to 4.5 parts of ethyl acrylate, 64.5 parts of n-butyl acrylate, 29.5 parts of methoxyethyl acrylate, and 1.5 parts of mono-n-butyl fumarate, the emulsion was changed to nonylphenyloxyhexaoxyethylene phosphate sodium salt, and the emulsion containing anti-aging agent was changed to the anti-aging emulsion 2, and each of the properties were evaluated. The results of the acrylic rubber sheet (B) are shown in Tables 3-1 and 3-2.

[Example 3]

An acrylic rubber sheet (C) and an acrylic bale (C) were obtained in the same manner as in Example 1 except that the monomer component was changed to 48.25 parts of ethyl acrylate, 50 parts of n-butyl acrylate and 1.75 parts of mono-n-butyl fumarate, the emulsifier was changed to tridecyloxyhexaoxyethylene phosphate sodium salt, and the emulsion containing anti-aging agent was changed to the anti-aging emulsion 3, and each of the properties (the compound agent was changed to "Composition 2") were evaluated. The results of the acrylic rubber sheet (C) are shown in Tables 3-1 and 3-2.

[Example 4]

An acrylic rubber sheet (D) and an acrylic rubber bale (D) were obtained in the same manner as in Example 3 except that the temperature of the first dehydration barrel of the screw-type extruder was changed to 100°C, the temperature of the second dehydration barrel was changed to 120°C so that the drainage was performed only by the first dehydration barrel, and the water content of the hydrous crumbs after drainage in the first dehydration barrel was changed to 30%, and each of the properties were evaluated. The results of the acrylic rubber sheet (D) are shown in Tables 3-1 and 3-2.

[Example 5]

An acrylic rubber sheet (E) and an acrylic rubber bale (E) were obtained in the same manner as in Example 4 except that the monomer component were changed to 28 parts of ethyl acrylate, 38 parts of n-butyl acrylate, 27 parts of methoxyethyl acrylate, 5 parts of acrylonitrile and 2 parts of allyl glycidyl ether, and each of the properties (the compound agent was changed to "Composition 3") were evaluated. The results of acrylic rubber sheet (E) are shown in Tables 3-1 and 3-2.

[Example 6]

An acrylic rubber sheet (F) and an acrylic rubber bale (F) were obtained in the same manner as in Example 4 except that the monomer component was changed to 42.2 parts of ethyl acrylate, 35 parts of n-butyl acrylate, 20 parts of methoxyethyl acrylate, 1.5 parts of acrylonitrile and 1.3 parts of vinyl chloroacetate, and each of the properties (the compounding agent was changed to "Composition 4") were evaluated. The results of the acrylic rubber sheet (F) are shown in Tables 3-1 and 3-2.

[Example 7]

An acrylic rubber sheet (G) and an acrylic rubber bale (G) were obtained in the same manner as in Example 6 except that the emulsion containing the anti-aging agent was changed to the anti-aging emulsion 4, and each of the properties were evaluated. The results of the acrylic rubber sheet (G) are shown in Tables 3-1 and 3-2.

[Example 8]

Acrylic rubber sheet (H) and acrylic rubber bale (H) were obtained in the same manner as in Example 6 except that the emulsion containing the anti-aging agent was changed to the anti-aging emulsion 5, and each of the properties were evaluated. The results of the acrylic rubber sheet (H) are shown in Tables 3-1 and 3-2.

[Comparative Example 1]

46 parts of pure water, 42.2 parts of ethyl acrylate, 35 parts of n-butyl acrylate, 20 parts of methoxyethyl acrylate, 1.5 parts of acrylonitrile, and 1.3 parts of vinyl chloroacetate were put in a mixing vessel equipped with a homomixer, with 0.709 parts of sodium lauryl sulfate and 1.82 parts of polyoxyethylene dodecyl ether (molecular weight 1500) as an emulsifier, and were stirred to obtain a monomer emulsion.

Next, 170 parts of pure water and 3 parts of the monomer emulsion obtained above were put into a polymerization reaction tank equipped with a thermometer and a stirrer, and cooled to 12°C under a nitrogen stream. Then, the rest of the monomer emulsion, 0.00033 part of ferrous sulfate, 0.264 part of sodium ascorbate, and 0.22 part of potassium persulfate were continuously added dropwise to the polymerization reaction tank over 3 hours. Thereafter, allowed the reaction to continue with the temperature inside the polymerization reaction tank kept at 23°C, confirmed that the polymerization conversion rate reached about 100%, and terminated the polymerization reaction by adding hydroquinone as a polymerization terminator, and added the anti-aging emulsion 6 shown in Table 1 as an anti-aging agent-containing emulsion, thereby to obtain an emulsion polymerization liquid.

Subsequently, after heating the emulsion polymerization liquid to 80°C, 0.7% sodium sulfate aqueous solution (coagulant liquid) was continuously added so that the polymerized liquid was coagulated, and then filtrated the coagulated polymerized liquid to obtain hydrous crumbs. 100 parts of the hydrous crumbs thus obtained was added to 194 parts of industrial water, and after stirred at 25°C for 5 minutes, then the hydrous crumbs that drain water from the coagulation tank were washed 4 times, and then 194 parts of a sulfuric acid aqueous solution of pH3 was added and stirred at 25°C for 5 minutes, thereafter water was drained from the coagulation tank, and acid washing was performed once, then 194 parts of pure water was added and pure water washing was performed once, and then dried by a warm air drier of 160°C, to obtain a crumb-shaped acrylic rubber (I) having a water content of 0.4% by weight. The properties of the obtained crumb-shaped acrylic rubber (I) were evaluated and are shown in Tables 3-1, 3-2.

[Comparative Example 2]

A crumb-shaped acrylic rubber (J) was obtained in the same manner as in Comparative Example 1 except that the emulsion containing anti-aging agent was changed to the anti-aging emulsion 7 shown in Table 1. Each of the properties of the obtained crumb-shaped acrylic rubber were evaluated and the results are shown in Tables 3-1 and 3-2.

[Table 3-1]

| | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|
| **Type of Acrylic Rubber Sheet or Crumb** | (A) | (B) | (C) | (D) | (E) | (F) | (G) | (H) | (I) | (J) |
| Type of reactive group | Carboxyl Group | Carboxyl Group | Carboxyl Group | Carboxyl Group | Epoxy Group | Chlorine | Chlorine | Chlorine | Chlorine | Chlorine |
| Reactive group content (%) | 0.31 | 0.31 | 0.35 | 0.34 | 0.37 | 0.27 | 0.27 | 0.27 | 0.27 | 0.27 |
| **Monomeric unit Composition of Acrylic Rubber (%)** | | | | | | | | | | |
| Ethyl acrylate | 74.5 | 4.5 | 48.25 | 48.25 | 28 | 42.2 | 42.2 | 42.2 | 42.2 | 42.2 |
| n-butyl acrylate | 17 | 64.5 | 50 | 50 | 38 | 35 | 35 | 35 | 35 | 35 |
| Methoxyethyl acrylate | 7 | 29.5 | - | - | 27 | 20 | 20 | 20 | 20 | 20 |
| Acrylonitrile | | - | - | - | 5 | 1.5 | 1.5 | 1.5 | 1.5 | 1.5 |
| Mono-n-butyl fumarate | 1.5 | 1.5 | 1.75 | 1.75 | - | - | - | - | - | - |
| Allyl glycidyl ether | | - | - | - | 2 | - | - | - | - | - |
| Chlorovinyl acetate | | - | - | - | - | 1.3 | 1.3 | 1.3 | 1.3 | 1.3 |

(continued)

**Anti-Aging Agent Addition Process**

| Type of Anti-aging Agent 1 | | [RG1076 | IRG1076 | , IRG1076 | IRG1076 | IRG1076 | [RG1076 | IRG1076 | IRG1076 | IRG1076 | Nocrac CD |
|---|---|---|---|---|---|---|---|---|---|---|---|
| | Molecular weight | 561 | 561 | 561 | 561 | 561 | 561 | 561 | 561 | 561 | 406 |
| | Melting point (°C) | 52 | 52 | 52 | 52 | 52 | 52 | 52 | 52 | 52 | 95 |
| | Addition amount (parts) | 1 | 1 | 1 | 1 | 1 | 1 | 1 | 1 | 1 | 1 |
| Anti-aging agent addition (parts) | | 1 | 1 | 1 | 1 | 1 | 1 | 1 | 1 | 1 | 1 |
| **Preparing Condition of Emulsion Containing Anti-Aging Agent** | | | | | | | | | | | |
| | Emulsion liquid emulsifier concentration (%) | 11 | 11 | 11 | 11 | 11 | 11 | 11 | 0.2 | 0.2 | 0.2 |
| | Water temperature (°C) | 70 | 70 | 70 | 70 | 70 | 70 | 25 | 25 | 25 | 25 |
| **Property Values of Emulsion Containing Anti-Aging Agent** | | | | | | | | | | | |
| | Anti-aging agent concentration (%) | 38 | 38 | 38 | 38 | 38 | 38 | 38 | 38 | 50 | 50 |
| | ※ Emulsifier concentration (%) | 6.9 | 6.9 | 6.9 | 6.9 | 6.9 | 6.9 | 6.9 | 0.1 | 0.1 | 0.1 |
| | pH | 5.2 | 5.4 | 5.1 | 5.1 | 5.1 | 5.1 | 5.1 | 5.1 | 5.6 | 5.8 |
| **Drying Process** | | Extruder | Extruder | Extruder | Extruder | Extruder | Extruder | Extruder | Extruder | Hot air drying | Hot air drying |

(continued)

| Anti-Aging Agent Addition Process | | | | | | | | | | |
|---|---|---|---|---|---|---|---|---|---|---|
| **Product Shape** | Sheet | Sheet | Sheet | Sheet | Sheet | Sheet | Sheet | Sheet | Crumb | Crumb |

※1 : IRG1076 in the table represents 3-(3,5-di-tert-butyryl-4-hydroxoxyphenyl) stearyl propionate (made by BASF SE),
Nocrac CD represents 4,4'-bis ($\alpha$, $\alpha$-dimethylbenzyl) diphenylamine (made by OUCHI SHINKO CHEMICAL INDUSTRIAL CO., LTD.). [0340]

[Table 3-2]

**Property Values of Acrylic Rubber Sheet or Crumb**

| | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|
| Specific gravity | 1.138 | 1.142 | 1.156 | 1.132 | 1.138 | 1.098 | 1.098 | 1.098 | 0.713 | 0.728 |
| Gel amount (%) | 1.2 | 1.8 | 2.1 | 1.5 | 3.7 | 2.2 | 2.2 | 2.2 | 70.5 | 72.5 |
| Ash content (%) | 0.114 | 0.110 | 0.090 | 0.172 | 0.171 | 0.167 | 0.170 | 0.167 | 0.285 | 0.285 |
| Tg(°C) | -20 | -39 | -28 | -28 | -25 | -29 | -29 | -29 | -29 | -29 |
| pH | 4.7 | 5 | 4.5 | 4.8 | 5 | 4.8 | 4.8 | 4.8 | 3.1 | 3.1 |
| Anti-aging agent content (%) | 0.96 | 0.96 | 0.95 | 0.97 | 0.95 | 0.95 | 0.96 | 0.96 | 0.94 | 0.94 |
| Water content (%) | 0.4 | 0.4 | 0.4 | 0.3 | 0.3 | 0.4 | 0.4 | 0.4 | 0.4 | 0.4 |
| Mw/1000 | 1610 | 1380 | 1450 | 1450 | 1410 | 1520 | 1520 | 1520 | 1480 | 1480 |
| Mz/Mw | 1.8 | 1.69 | 1.79 | 1.79 | 1.68 | 1.75 | 1.75 | 1.75 | 1.74 | 1.74 |
| $\eta$ (100°C) (Pa·s) | 3053 | 3124 | 3150 | 3150 | 2989 | 3081 | 3081 | 3080 | 2990 | 3005 |
| $\eta$ (60°C) (Pa·s) | 3689 | 3360 | 3620 | 3620 | 3672 | 3520 | 3520 | 3520 | 3380 | 3450 |
| Viscosity ratio $\eta$ (100°C) / $\eta$ (60°C) | 0.83 | 0.93 | 0.87 | 0.87 | 0.84 | 0.88 | 0.88 | 0.88 | 0.86 | 0.87 |

**Property Evaluation of Acrylic Rubber Sheet or Crumb**

| | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|
| **Storage Stability (45°C × 80%RH × 7days)** Cross-linking density change rate (index) | 16 | 18 | 16 | 19 | 16 | 18 | 41 | 76 | 100 | 142 |
| **Processability Test (50°C)** BIT (index) | 20 | 21 | 21 | 26 | 27 | 25 | 26 | 25 | 100 | 94 |

**Normal Physical Property Evaluation**

| | | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|---|---|
| | Breaking strength | ◎ | ◎ | ◎ | ◎ | ◎ | ◎ | ◎ | ◎ | ◎ | ◎ |
| | 100% tensile stress | ◎ | ◎ | ◎ | ◎ | ◎ | ◎ | ◎ | ◎ | ◎ | ◎ |

(continued)

| | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|
| Breaking elongation | ◎ | ◎ | ◎ | ◎ | ◎ | ◎ | ◎ | ◎ | ◎ | ◎ |

**EP 4 001 323 A1**

From Tables 3-1 and 3-2, it can be understood that acrylic rubber sheets (A) to (H) of the present invention mainly composed of (meth) acrylic acid ester and having a weight average molecular weight (Mw) of 100,000 to 5,000,000 and a ratio (Mz / Mw) of a Z-average molecular weight (Mz) and a weight average molecular weight (Mw) is 1.3 or more, wherein the acrylic rubber sheet contains a phenolic anti-aging agent, and an amount of gel is 50% by weight or less, is remarkably improved in storage stability and processability without impairing strength properties (Examples 1 to 8).

Regarding the strength properties, it can be understood that the acrylic rubber sheets (A) to (H) and the crumb-shaped acrylic rubbers (I) to (J) produced under the conditions of the Examples of the present application and the Comparative Examples have the weight average molecular weight (Mw) of the absolute molecular weight measured by GP C-MALS exceeding 100,000, and the ratio (Mz / Mw) of the Z-average molecular weight (Mz) and the weight average molecular weight (Mw) of the absolute molecular weight distribution with emphasis on the high molecular weight region measured by GPC-MALS as larger as to exceed 1.3, so that all the normal physical properties including the breaking strength are excellent, thereby maintaining the workability and strength of the acrylic rubber sheets (A) to (H) of the present invention (Examples 1 to 6 and Comparative Example 1). On the other hand, from Tables 3-1 and 3-2, it can be understood that the crumb-shaped acrylic rubber (I) of Comparative Example 1 was insufficient in storage stability and processability, and the crumb-shaped acrylic rubber (J) of Comparative Example 2 is extremely inferior in storage stability.

Regarding the storage stability, it can be considered that the acrylic rubber sheets (A) to (H) have the same content of the anti-aging agent as the crumb-shaped acrylic rubber (I), so that the acrylic rubber sheets (A) to (H) are so constructed that the specific surface area of the acrylic rubber sheets is much smaller than that of the crumb-shaped acrylic rubber, the specific gravity is large, and the structure does not contain air and is not easily oxidized, and the phenolic anti-aging agent is uniformly finely dispersed in the acrylic rubber sheets (A) to (H), resulting in the difference in the effect of storage stability (comparison between Examples 1 to 8 and Comparative Example 1). Further, after the storage stability test, no change in the tint of the acrylic rubber sheet of the present invention was observed, but the crumb-shaped acrylic rubber sheets (I) to (J) of the comparative examples were yellowed.

Further, from Tables 3-1 and 3-2, it can be understood that the acrylic rubber sheets (A) to (H) of the present invention can remarkably enhance the storage stability by making the phenolic anti-aging agent added to emulsion polymerization liquid into emulsion containing phenolic anti-aging agent with water and emulsifier, raising the emulsifier concentration of the emulsion containing phenolic anti-aging agent to a specified level or higher, and setting the water temperature during emulsion preparation at a specified temperature or higher or at the melting point of the phenolic anti-aging agent or higher (comparison between Examples 1 to 7 and Example 8).

Regarding processability, in the present invention, the polymerization conversion rate of emulsion polymerization is increased to improve the strength characteristics of the sheet. Although when the polymerization conversion rate is increased, the amount of gel insoluble in the methyl ethyl ketone increases rapidly and the processability of the acrylic rubber deteriorates, the gel insoluble in methyl ethyl ketone disappeared by drying and melt-kneading in the screw-type extruder until there was substantially no water content (water content less than 1%). However, it is difficult to make the acrylic rubber having a large specific heat and having a reactive group substantially free of water, and it is achieved through arrangement on various conditions of the hydrous crumb temperature and the screw-type extruder to be charged as shown in the examples.

Further, from Tables 3-1 and 3-2, it can be understood that the acrylic rubbers (A) to (H) containing a phenolic anti-aging agent having a specific melting point and having specific gravity, gel amount, glass transition temperature (Tg), pH, anti-aging agent content, water content, and weight average molecular weight (Mw), ratio (Mz / Mw) of Z-average molecular weight (Mz) and weight average molecular weight (Mw), complex viscosity ($\eta$ 100°C) at 100°C, a complex viscosity ($\eta$ 60°C) at 60°C and a complex viscosity ratio ($\eta$ 100°C / $\eta$ 60°C) at 100°C and 60°C in a specific range are highly excellent in storage stability and processability without impairing normal physical properties such as strength properties (Examples 1 to 8).

The property values of the acrylic rubber bales (A) to (H) of the present invention in which the acrylic rubber sheets (A) to (H) are laminated are the same as the property values of the respective acrylic rubber sheets to be laminated.

[EXPLANATION OF REFERENCE NUMERALS]

1 Acrylic Rubber Production System
3 Coagulation Device
4 Washing Device
5 Screw-Type Extruder
6 Cooling Device
7 Baling Device

40

**Claims**

1. An acrylic rubber sheet, comprising

   an acrylic rubber mainly composed of a (meth) acrylic acid ester and having a weight average molecular weight (Mw) of 100,000 to 5,000,000 and a ratio (Mz / Mw) of a Z-average molecular weight (Mz) and a weight average molecular weight (Mw) is 1.3 or more, wherein
   the acrylic rubber sheet contains a phenolic anti-aging agent, and
   a gel amount of the sheet is 50% by weight or less.

2. The acrylic rubber sheet according to claim 1, wherein the acrylic rubber sheet is a melt-kneaded sheet.

3. The acrylic rubber sheet according to claim 1 or 2, wherein the gel amount is 15% by weight or less.

4. The acrylic rubber sheet according to any one of claims 1 to 3, wherein a proportion of acrylic rubber in the acrylic rubber sheet is 85% by weight or more.

5. The acrylic rubber sheet according to any one of claims 1 to 4, wherein an ash content in the acrylic rubber sheet is 0.8% by weight or less.

6. The acrylic rubber sheet according to any one of claims 1 to 5, wherein a content of at least one element selected from the group consisting of sodium, sulfur, calcium, magnesium, and phosphorus in the ash is 60% by weight or more.

7. The acrylic rubber sheet according to any one of claims 1 to 6, wherein the phenolic anti-aging agent is a hindered phenolic anti-aging agent.

8. The acrylic rubber sheet according to any one of claims 1 to 7, wherein a melting point of the phenolic anti-aging agent is 150°C or lower.

9. The acrylic rubber sheet according to any one of claims 1 to 8, wherein a molecular weight of the phenolic anti-aging agent is in the range of 100 to 1,000.

10. The acrylic rubber sheet according to any one of claims 1 to 9, wherein a content of the phenolic anti-aging agent is 0.001 to 15% by weight.

11. The acrylic rubber sheet according to any one of claims 1 to 10, wherein the weight average molecular weight (Mw) is in the range of 1,000,000 to 5,000,000.

12. The acrylic rubber sheet according to any one of claims 1 to 11, wherein a complex viscosity ($[\eta]$ 60°C) at 60°C is 15,000 Pa·s or less.

13. The acrylic rubber sheet according to any one of claims 1 to 12, wherein a ratio ($[\eta]$ 100°C / $[\eta]$ 60°C) of a complex viscosity ($[\eta]$ 100°C) at 100°C and a complex viscosity ($[\eta]$ 60°C) at 60°C is 0.5 or more.

14. The acrylic rubber sheet according to any one of claims 1 to 13, wherein a pH is 6 or less.

15. The acrylic rubber sheet according to any one of claims 1 to 14, wherein a specific gravity is 0.7 or more.

16. The acrylic rubber sheet according to any one of claims 1 to 15, wherein a specific gravity is in the range of 0.8 to 1.4.

17. The acrylic rubber sheet according to any one of claims 1 to 16, wherein a Mooney viscosity (ML1+4,100°C) of the acrylic rubber sheet is in the range of 10 to 150.

18. A method for producing an acrylic rubber sheet, comprising:

   an emulsion polymerization process to emulsify a monomer component mainly comprising a (meth) acrylic acid ester with water and an emulsifier and to emulsion-polymerize the emulsified monomer component in the presence of a polymerization initiator up to a polymerization conversion rate of 90% by weight or more to obtain an emulsion polymerization liquid;

an anti-aging agent addition process to add a phenolic anti-aging agent to the obtained emulsion polymerization liquid;

a coagulation process to contact the emulsion polymerization liquid added with the anti-aging agent with a coagulant liquid to generate hydrous crumbs;

a washing process to wash the generated hydrous crumbs; and

a dehydration/drying/molding process to dehydrate the washed hydrous crumbs and to extrude a sheet-shaped dry rubber having a water content of less than 1% by weight, by using a screw-type extruder provided with a dehydration barrel having a dehydration slit, a drying barrel to dry under a reduced pressure, and a die at a tip thereof.

19. The method for producing an acrylic rubber sheet according to claim 18, wherein a temperature of the hydrous crumb charged into the screw-type extruder is 40°C or higher.

20. The method for producing an acrylic rubber sheet according to claim 18 or 19, wherein the phenolic anti-aging agent is added as a phenolic anti-aging agent-containing emulsion that is emulsified with hot water and an emulsifier.

21. The method for producing an acrylic rubber sheet according to claim 20, wherein the temperature of the hot water is 40°C or higher.

22. The method for producing an acrylic rubber sheet according to claim 20 or 21, wherein the temperature of the hot water is equal to or higher than the melting point of the phenolic anti-aging agent used.

23. The method for producing an acrylic rubber sheet according to any one of claims 20 to 22, wherein an emulsifier concentration of the phenolic anti-aging agent containing emulsion is 1% by weight or more.

24. An acrylic rubber bale obtained by laminating the acrylic rubber sheets according to any one of claims 1 to 17.

25. A rubber mixture obtained by mixing the acrylic rubber sheet according to any one of claims 1 to 17 or the acrylic rubber bale according to claim 24 with a filler and a cross-linking agent.

26. A method for producing a rubber mixture comprising mixing the acrylic rubber sheet according to any one of claims 1 to 17 or the acrylic rubber bale according to claim 24 with a filler and a cross-linking agent, by using a mixer.

27. A method for producing a rubber mixture, comprising:

mixing the acrylic rubber sheet according to any one of claims 1 to 17 or the acrylic rubber bale according to claim 24 with a filler; and thereafter
mixing a cross-linking agent.

28. A rubber cross-linking product obtained by cross-linking the rubber mixture according to claim 25.

FIG.1

FIG.2

FIG.3

<table>
<tr><td colspan="2" align="center">**INTERNATIONAL SEARCH REPORT**</td><td>International application No.<br><br>PCT/JP2020/022314</td></tr>
</table>

**A. CLASSIFICATION OF SUBJECT MATTER**
Int.Cl. C08F20/10(2006.01)i, C08F6/14(2006.01)i, C08J3/20(2006.01)i, C08K5/13(2006.01)i, C08L33/04(2006.01)i
FI: C08F20/10, C08F6/14, C08K5/13, C08L33/04, C08J3/20ZCEY
According to International Patent Classification (IPC) or to both national classification and IPC

**B. FIELDS SEARCHED**

Minimum documentation searched (classification system followed by classification symbols)
Int.Cl. C08F20/10, C08F6/14, C08J3/20, C08K5/13, C08L33/04

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)
CAplus/REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| Y<br>A | WO 2018/139466 A1 (ZEON CORPORATION) 02.08.2018 (2018-08-02), claims, paragraphs [0068], [0075], [0076], examples | 18-19<br>1-17, 20-28 |
| Y<br>A | JP 2004-131654 A (ZEON CORPORATION) 30.04.2004 (2004-04-30), claims, paragraph [0009], examples | 18-19<br>1-17, 20-28 |
| A | WO 2011/093444 A1 (ZEON CORPORATION) 04.08.2011 (2011-08-04) | 1-28 |
| A | WO 2018/143101 A1 (ZEON CORPORATION) 09.08.2018 (2018-08-09) | 1-28 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>18.08.2020 | Date of mailing of the international search report<br>01.09.2020 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

INTERNATIONAL SEARCH REPORT
Information on patent family members

International application No.

PCT/JP2020/022314

| | | |
|---|---|---|
| WO 2018/139466 A1 | 02.08.2018 | EP 3575345 A1<br>claims, paragraphs [0097],<br>[0104], [0105], examples<br>SG 11201906761P A<br>CN 110198971 A<br>KR 10-2019-0104171 A<br>TW 201833145 A |
| JP 2004-131654 A | 30.04.2004 | (Family: none) |
| WO 2011/093444 A1 | 04.08.2011 | US 2012/0302674 A1<br>EP 2530119 A1<br>CN 102812083 A<br>KR 10-2012-0108055 A |
| WO 2018/143101 A1 | 09.08.2018 | US 2020/0002523 A1<br>EP 3578580 A1<br>SG 11201906829S A<br>CN 110234667 A<br>KR 10-2019-0109417 A |

Form PCT/ISA/210 (patent family annex) (January 2015)

**EP 4 001 323 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018139466 A, Pamphlet
- JP 3599962 B
- WO 2018143101 A, Pamphlet